# EUROPÄISCHE PATENTSCHRIFT

(11) **EP 2 999 730 B1**
(45) Veröffentlichungstag und Bekanntmachung des Hinweises auf die Patenterteilung: **15.04.2020**
(21) Anmeldenummer: 14724768.8
(22) Anmeldetag: 19.05.2014
(51) Int. Cl.: C08G 59/68

(54) **POLYMERISIERBARE REAKTIONSMISCHUNG ZUR HERSTELLUNG VON EPOXIDHARZEN UND DEREN VERWENDUNG**
POLYMERIZABLE REACTION MIXTURE FOR PRODUCING EPOXY RESINS, AND THE USE THEREOF
MÉLANGE RÉACTIONNEL POLYMÉRISABLE SERVANT À PRÉPARER DES RÉSINES ÉPOXYDIQUES ET SON UTILISATION

(30) Priorität: 23.05.2013 DE 102013008723
(43) Veröffentlichungstag der Anmeldung: 30.03.2016
(73) Patentinhaber: Deutsche Institute für Textil- und Faserforschung Denkendorf, 73770 Denkendorf (DE)
(72) Erfinder: BUCHMEISER, Michael, R., 73630 Remshalden (DE); NAUMANN, Stefan, 73733 Esslingen (DE)
(74) Vertreter: Held, Stephan
(86) Internationale Anmeldenummer: PCT/EP2014/060254
(87) Internationale Veröffentlichungsnummer: WO 2014/187782

(56) Entgegenhaltungen:
- US-A1- 2007 090 532

## Beschreibung

Die Erfindung betrifft eine polymerisierbare Reaktionsmischung zur Herstellung von Epoxidharzen mit einem Gehalt an polymerisierbaren monomeren, oligomeren oder präpolymeren Epoxidverbindungen, an Polymerisationskatalysatoren, an Härtern und gegebenenfalls weiteren Additiven sowie deren vorteilhafte Verwendung zur Herstellung von Thermoplasten oder Duroplasten von Epoxidharzen.

Epoxidharze sind thermoplastische oder duroplastische Werkstoffe, je nach Vernetzungsgrad, die vor allem als Coatings, Klebstoffe oder auch formgebende Bauteile eingesetzt werden^{[1,2]}. Sie werden durch Vernetzung von Präpolymeren mit Epoxid-Funktionalitäten (monomer oder oligomer; meist flüssige oder zähflüssige Verbindungen) mit Härtern (bzw. Vernetzern) dargestellt. Als Härter kommen neben anderen v.a. Säureanhydride, mehrwertige Alkohole bzw. mehrwertige Phenole und Amine in Frage. Die chemische Konstitution des Härters bzw. dessen Konzentration erlauben eine Einstellung der Eigenschaften des Epoxidharzes, was mechanische/thermische Beständigkeit, chemische Robustheit und Aushärtungsbedingungen betrifft (insbesondere Härtungszeit und Härtungstemperatur). Klassische Katalysatoren sind tertiäre Amine, wie 1,2-Dimethylimidazol, 1-MethylImidazol oder Benzyldimethylamin, oder Tetraalkylammoniumverbindungen, z.B. Tetraethylammoniumbromid^{[3,4]}.

Von besonderer Bedeutung im Zusammenhang mit der nachfolgend noch beschriebenen Erfindung ist die Unterteilung in Einkomponentensysteme (1K) und Zweikomponentensysteme (2K). Erstere sind in der Handhabung besonders einfach, da das Zumischen einer zweiten Komponente vor Anwendung entfällt, erfordern aber ein System, das unter Lagerungsbedingungen (T < 45°C) nicht polymerisiert. Bei höherer Reaktionstemperatur soll die Polymerisation dann aber stattfinden. Diese Anforderungen werden von thermisch latenten Katalysatoren erfüllt. Wichtige latente Katalysatoren sind Dicyandiamid, Bortrifluorid-Amin-Addukte oder quartäre Phosphonium-Verbindungen. Als latente Katalysatoren sind auch substituierte Imidazolium-Salze auf großes Interesse gestoßen: 1-Butyl-3-methyl-imidazolium-tetrafluoroborat^{[5]} und 1-Ethyl-3-methyl-imidazolium-hexafluorophosphat^{[6]} wurden als latente Katalysatoren beschrieben, wobei Aktivität erst bei Temperaturen >190°C eintritt.

In verschiedenen Patenten und Patentanmeldungen werden epoxidvernetzende, alkylierte Imidazolium-basierte Katalysatoren veröffentlicht (DE-A 2416408; US 3635894; JP 2004217859; EP 0458502). Insbesondere ist hier auf eine Patentfamilie der BASF SE hinzuweisen (WO 2008/152002 A1; WO 2008/152003 A1; WO 2008/152004 A1; WO 2008/152005 A1; WO 2008/152011 A1). In Letzteren wird speziell das Gegenion der Imidazolium-Kationen als wichtig für Löslichkeit und Reaktivität offenbart, wobei unter anderem Sauerstoffsäuren des Phosphors, Carboxylate, Thiocarboxylate, Thiocycanate und Dicyanamid als Gegenion dienen. Hierbei wurde beispielsweise unter Einsatz von 1-Ethyl-3-methyl-imidazoliumacetat der Diglycidylether von Bisphenol A mit Methylhexahydrophthalsäureanhydrid gehärtet. Nach 3 h bei 100°C und 2 h bei 150°C wurde im resultierenden Duroplasten eine Glasübergangstemperatur von 156°C gefunden.

Die US 2007/090532 A1 offenbart N-heterocyclische Carbenverbindungen des Typs 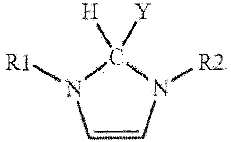 in denen HY für eine elektrophile CH Verbindung, wie Pentafluorobenzol steht, die bei Temperaturen von 50 bis 150°C unter Ausbildung eines Carbens abgespalten werden kann. Diese N-heterocyclischen Carbenverbindungen werden in der US 2007/090532 A1 zur Härtung von Epoxyharzen eingesetzt.

Die oben genannten Beispiele zu latenten Imidazolium-Derivaten basieren mechanistisch auf einer thermisch initiierten (*N-*)Dealkylierung (nachfolgend dargestellter Reaktionsmechanismus A), wobei sich eine Alkylimidazol-Spezies bildet^{[7,8]}. Diese ist nun ein typischer Katalysator für die Darstellung von Epoxidharzen (siehe oben). Dealkylierungen erfordern relativ drastische Bedingungen. Im Gegensatz dazu behandelt die nachfolgend detailliert dargestellte Erfindung ein latentes System, das auf geschützten N-heterocyclischen Carbenen (NHCs) beruht, wie dargestellt durch den nachfolgend beschriebenen Reaktionsmechanismus B.

Die N-heterocyclischen Carbene können unter anderem auch Imidazolium-basiert sein (siehe weiter unten), setzen aber unter vergleichsweise milden Bedingungen ein Carben frei. Carbene sind deutlich basischer bzw. nucleophiler als tertiäre Amine und bieten so Vorteile in der Reaktivität^{[9]}. Für die beiden dargestellten Reaktionswege A und B wird demzufolge schematisch dargestellt, wie die thermische Aktivierung von NHCs im Vergleich zur Dealkylierung von Imidazolium-Salzen abläuft. 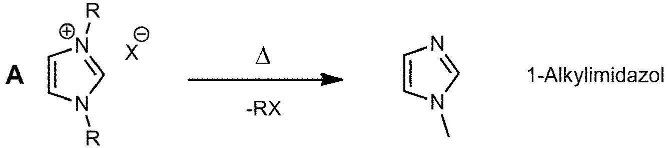 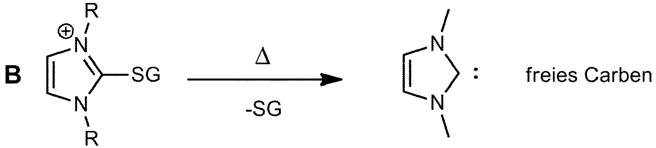 (Thermische Dealkylierung von Imidazolium-Salzen (A) und thermische Entschützung von Imidazolium-basierten Carbenen mit SG = Schutzgruppe (B))

Freie, nicht geschützte NHCs sind seit einiger Zeit als Polymerisationskatalysatoren bekannt, beispielsweise können Epoxide^{[10,11]} unter Ringöffnung polymerisiert werden.

Der Erfindung liegt demzufolge die Aufgabe zugrunde, die eingangs bezeichnete polymerisierbare Reaktionsmischung so weiterzubilden, dass folgende Anforderungen erfüllt werden: Ein leicht zugänglicher, thermisch latenter Katalysator zur Polymerisation von Epoxidharzen via Polyaddition mit verschiedenen Härtern soll mit den Ausgangsverbindungen gut mischbar sein, möglichst bis 45°C keine Reaktivität zeigen und bei nicht sehr hohen Temperaturen, < 190°C, vorzugsweise < 150°C, je nach der Anzahl der reaktiven funktionellen Gruppen der herangezogenen Reaktionspartner, zu thermoplastischen oder duroplastischen Polymeren führen. Diese sollen in ihren Eigenschaften mit herkömmlich produzierten Epoxidharzen vergleichbar sein oder diese noch möglichst übertreffen. Insbesondere sollen kürzere Härtungszeiten bei einfacher Handhabung erreichbar sein. Die Vernetzungen sollen bei geringer Katalysatorbeladung und in Luftatmosphäre ablaufen können. Latenter Katalysator, Epoxyverbindung und Härter sollen zusammen längere Zeit ohne nennenswerte Reaktion lagerbar sein, wobei eine anschließende, thermische Vernetzung noch möglich ist.

Erfindungsgemäß wird diese Aufgabe in einer Weiterbildung der eingangs erwähnten polymerisierbaren Reaktionsmischung dadurch erreicht, dass die Polymerisationskatalysatoren Präkatalysatoren in Form von thermisch-reaktivierbaren geschützten N-heterocyclischen Carbenen vorliegen, umfassend
1.) Verbindungen der allgemeinen Formel (Ia) oder (Ib): 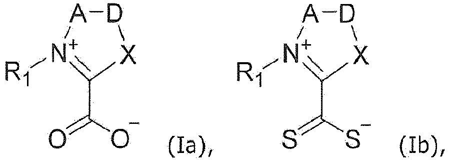 worin bedeuten:
   R₁ einen geradkettigen oder verzweigten C₁-C₁₀-Alkyl-, insbesondere C₁-C₇-Alkyl-, einen geradkettigen oder verzweigten C₂-C₁₀-Alkenyl-, insbesondere C₂-C₇-Alkenyl-, einen C₃-C₁₂-Cycloalkyl-, insbesondere C₃-C₆-Cycloalkyl-, einen geradkettigen oder verzweigten C₆-C₁₀₀-Polyoxyalkylen-, insbesondere C₆-C₃₀-Polyoxyalkylen-, einen C₆-oder C₁₀-Aryl- oder einen C₄-C₉-Hetaryl-Rest,
   A und D, unabhängig voneinander, einen Methylen-Rest, CHR₃-, CR₃R₃,-, einen Ethylen-, -CH₂CHR₃-, -CHR₃CHR₃-, -CH₂R₃R₃-, -CHR₃CR₃R₃-, CR₃R₃CR₃R₃-, einen Propylen-, -CH₂CH₂CHR₃-, -CH₂CHR₃CH₂-, -CH₂CH₂CR₃R₃-, -CH₂CHR₃CHR₃-, -CHR₃CH₂CR₃R₃-, -CH₂CHR₃R₃-, -CHR₃-, -CHR₃CH₂CHR₃-, -CHR₃CHR₃CHR₃-, -CH₂CR₃R₃CH₂, -CH₂CHR₃CR₃R₃, -CH₂CR₃R₃CHCR₃, -CHR₃CR₃R₃CHR₃-, -CHR₃CHR₃CR₃R₃-, -CR₃R₃CR₃R₃CH₂-, -CR₃R₃CHR₃CR₃R₃-, -CHR₃CR₃R₃CR₃R₃- oder-CR₃R₃CR₃R₃CR₃R₃-Rest oder
   A und D, zusammengenommen, einen Propylen-, C₁-C₂-Phenylen oder einen mit einem C₁-C₁₀-Alkyl-, C₂-C₁₀-Alkenyl-, C₃-C₁₂-Cycloalky-, C₆-C₁₀₀-Polyoxyalkylen-, C₆-oder C₁₀-Aryl- oder C₄-C₉-Hetaryl-Rest substituierten 1,2-Phenylen-, -CH=N-, -CH₂-NR₂-, Vinylen-, -CH₂=CHR₃-, -CHR₃=CH₂- oder -CHR₃=CHR₃-Rest, wobei die Reste R₃, unabhängig voneinander, die oben für R₁ angegebene Bedeutung haben, und die Alkyl- und Alkenyl-Reste die vorstehend dargestellte bevorzugte Bedeutung haben können, und
   X Sauerstoff, Schwefel oder -NR₂'-, wobei R₂' die oben für R₁ angegebene Bedeutung hat, oder
2.) Verbindungen der allgemeinen Formel II mit Lewis-Säuren, insbesondere auf der Basis von Magnesium-, Calcium-, Yttrium-, Lanthan-, Titan-, Zirkonium-, Mangan-, Eisen-, Kobalt-, Zink-, Aluminium-, Zinn-, Bismuth- oder Borkationen mit Anionen aus der Reihe Fluorid, Chlorid, Bromid, Sulfat, Hydrogensulfat, Trifluormethansulfonat, Methansulfonat, Benzolsulfonat, BF₄⁻, PF₆⁻, SbF₆, para-Toluolsulfonat, Trifluoracetat, (C₁-C₁₀-Alkyl)carboxylat, (C₃-C₁₀-cycloalkyl)carboxylat, (C₂-C₁₀-Alkenyl)carboxylat, (C₁-C₁₀-Alkoxy)carboxylat, 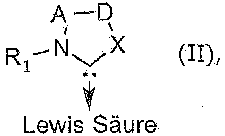 wobei R₁, A, D und X die oben in den Formeln (Ia) und (Ib) angegebene Bedeutung haben.

Das obige Verfahren wird dadurch bevorzugt ausgestaltet, dass der geradkettige oder verzweigte C₁-C₁₀-Alkyl-Rest einen Methyl-, Ethyl-, n-Propyl-, iso-Propyl-, tert.-Butyl- oder neo-Pentyl-Rest, der C₃-C₁₂-Cycloalkyl-Rest einen Cyclohexyl-Rest-, der C₆-oder C₁₀-Aryl-Rest einen Phenyl-, 2,6-Dimethylphenyl-, 2,6-Diisopropylphenyl- oder Mesityl-Rest darstellt.

Eine vorteilhafte Ausgestaltung des erfindungsgemäßen Verfahrens zeigt sich auch darin, dass in den Formeln (Ia), (Ib) oder (II) die Reste R₁, R₃, R₄ und R₅, unabhängig voneinander, einen Methyl-, Ethyl-, n-Propyl-, iso-Propyl-, tert.-Butyl-, neo-Pentyl-, iso-Amyl-, Cyclohexyl-, Phenyl-, 2,6-Dimethylphenyl-, 2,6-Diisopropylphenyl- oder Mesityl-Restdarstellen und die Reste A und D, jeweils unabhängig voneinander zusammengenommen, für einen Ethylen-, Vinylen- oder Propylen-Rest stehen.

Besonders zweckmäßig wird das erfindungsgemäße Verfahren dadurch ausgestaltet, indem die nachfolgend beschriebenen konkret bezeichneten Präkatalysatoren herangezogen werden, nachfolgend dargestellt durch die Formeln (**1f**) bis (**1C**) dargestellt werden: 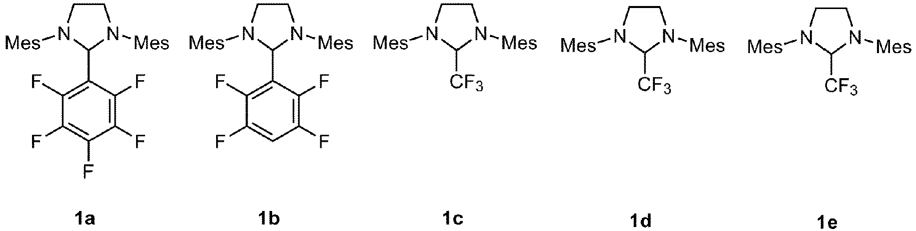 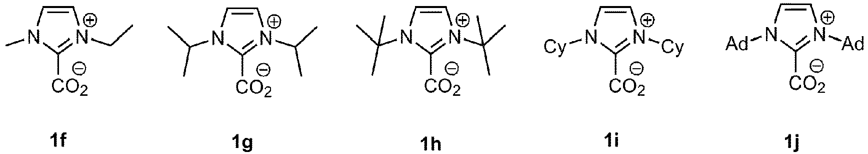 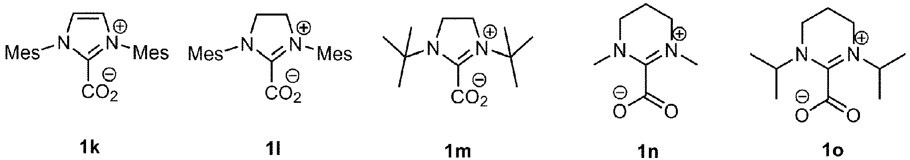 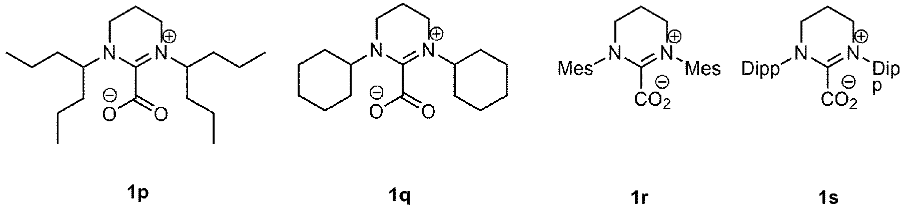 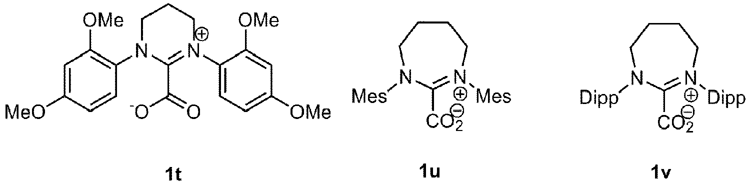 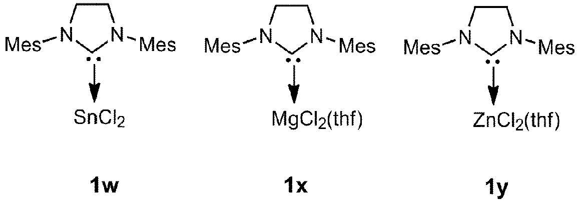 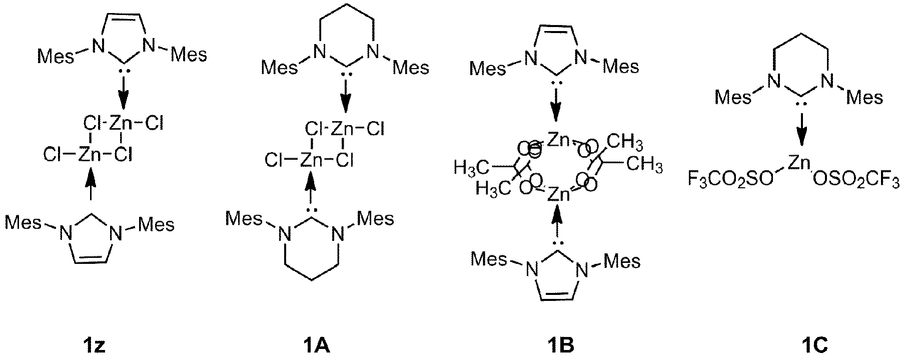 worin Mes einen Mesityl-, Ac einen Acetyl- und Me einen Methyl-Rest bedeuten.

Die vorstehend dargestellten Beispiele für erfindungsgemäß in Betracht kommende NHCs sind nicht limitierend. Dabei sind vor allem die Schutzgruppen mit jedem beliebigen NHC kombinierbar.

Die Synthesen der erfindungsgemäß in Betracht kommenden Präkatalysatoren sind prinzipiell literaturbekannt^{[18]}. Insbesondere die Cyclisierung von Amidinen ermöglicht dabei einen schnellen Zugang zu unterschiedlichen Ringgrößen. Bevorzugt erfolgt darauf die Deprotonierung mit einer starken, sterisch gehinderten Base, beispielsweise Kaliumhexamethyldisilizan (KHMDS) in einem Lösungsmittel wie z. B. THF. Das Lösungsmittel wird entfernt, der Rückstand beispielsweise mit Diethylether aufgeschlämmt und filtriert. Nun kann eine Schutzgruppe (z.B. CO₂ oder Metallsalze) zugegeben werden. Eine weitere Filtration und Trocknung liefert saubere Zielverbindungen, in der Regel bereits analysenrein. Da Amidine und ihre zyklischen Nachfolgeprodukte an Luft hergestellt werden können, bietet dieser Syntheseweg einen schnellen, einfachen Zugang zu einer Vielzahl an Verbindungen. Lediglich die Bildung des freien Carbens muss in einer Schutzgasatmosphäre erfolgen.

Die Erfindung lässt sich, wie nachfolgend gezeigt, vorteilhaft weiterbilden, um die beschriebene Aufgabe in dem wünschenswerten Umfang zu lösen: So ist es vorteilhaft, dass die Präkatalysatoren thermisch aktivierbar sind, insbesondere bei einer Temperatur von mehr als 45°C, insbesondere von mehr als 70°C. Als besonders vorteilhaft gilt für die thermische Aktivierbarkeit der Temperaturbereich von 75°C bis 145°C, insbesondere von 100°C bis 145°C.

Zu den polymerisierbaren Epoxidverbindungen mit ihren vorteilhaften Ausgestaltungen ist anzumerken, dass sie zweckmäßigerweise mehrere Epoxy-Gruppen, insbesondere 1 bis 8 Epoxy-Gruppen enthalten. Besonders vorteilhaft ist es, wenn die polymerisierbaren Epoxidverbindungen 2 bis 4 Epoxy-Gruppen, insbesondere 2 oder 3 Epoxy-Gruppen enthalten. Die hiermit zum Ausdruck gebrachte Funktionalität über die Epoxidverbindungen, dies auch im Hinblick auf die Funktionalität der noch anzusprechenden Härter, ermöglicht es fachmännisch, einerseits die polymerisierbare Reaktionsmischung in Duroplaste oder andererseits in Thermoplaste zu überführen.

Die polymerisierbaren Epoxidverbindungen zeigen bezüglich ihrer chemischen Grundstruktur keine relevante Einschränkung. Zweckmäßigerweise sind die polymerisierbaren Epoxidverbindungen ausschließlich oder partiell aromatisch, cycloaliphatisch oder aliphatisch. Dabei gilt es als besonders vorteilhaft, wenn die polymerisierbaren Epoxidverbindungen aus Epichlorhydrin und Alkoholen oder Phenolen, insbesondere Diphenolen, erhältlich sind. Dabei gilt es als besonders vorteilhaft, wenn die polymerisierbare Epoxidverbindung als Glycidylether von bi- oder oligophenolischen Verbindungen oder als hydrierte Derivate von diesen, insbesondere in Form von Bisphenol-A-diglycidylether (BADGE), Bisphenol-F-diglycidylether (BFDGE), Glycidylether von Novolacken, Vinylcyclohexendioxid, 3,4-Epoxy-2-methylcyclohexylmethyl-3,4-epoxy-6-methyl-cyclohexancarboxylat und/ oder Dicyclopentadienyldioxid, vorliegt. Darüber hinaus ist es mit Vorteilen verbunden, wenn die polymerisierbare Epoxidverbindung in Form von Glycidylmethacrylat und/oder 3,4-Epoxycyclohexylmethyl-3,4-epoxycyclohexylcarboxylat (CAS: 37042-87-8) vorliegt.

Es wurde vorstehend schon angesprochen, dass die erfindungsgemäße polymerisierbare Reaktionsmischung Härter bzw. Vernetzer enthält, wobei deren härtende Funktionalitäten mit denjenigen der eingesetzten Epoxyverbindung abgestimmt werden, um, wie bereits angesprochen, einen Thermoplast oder einen Duroplast als Erzeugnis der angestrebten Reaktion zu erhalten. Besonders bevorzugt ist es, wenn folgende Härter bzw. Vernetzer herangezogen werden: Novolacke, Melaminharze, hydrierte und substituierte Derivate von Phthalsäureanhydrid, insbesondere 3-Methylhexahydrophthalsäureanhydrid oder Hexahydrophthalsäureanhydrid, oder Dicyandiamid.

Hierzu scheinen folgende technologische Erläuterungen zum Mechanismus, der beim Einsatz der erfindungsgemäßen Reaktionsmischung abläuft, angebracht: Freie Carbene, wie sie nach thermischer Aktivierung der latenten Prekursor-Verbindungen freigesetzt werden, sind sowohl Basen als auch Nucleophile [B. Maji, M. Breugst, H. Mayr Angew. Chem. Int. Ed. 2011, 50, 6915-6919]. Letzteres befähigt die Carbene zum Angriff an polarisierte Carbonylgruppen, beispielsweise in Säureanhydriden. Sind Alkohol-Funktionalitäten anwesend, beispielsweise bei Verwendung von phenolischen Härtern, können Carbene als Basen fungieren und ein Alkoholat bilden. Beide Pfade erlauben die Polymerisation bzw. Vernetzung von Epoxiden mit Härtern oder Comonomeren (siehe Abbildung). Ob ein nucleophiler oder basischer Mechanismus vorliegt, wird durch die Struktur des Carbens bestimmt. Tendenziell wirken Tetrahydropyrimidinium-basierte Carbene eher als Basen, sterisch ungehinderte Imidazol-2-ylidene eher als Nucleophile [S. Naumann, F. G. Schmidt, R. Schowner, W. Frey, M. R. Buchmeiser Polym. Chem. 2013, 4, 2731-2740].

Die nachfolgenden Reaktionsgleichungen stellen Beispiele für die Bildung von initiierenden Spezies durch Carbene bei der Härtung/Polymerisation von Epoxidverbindungen dar:

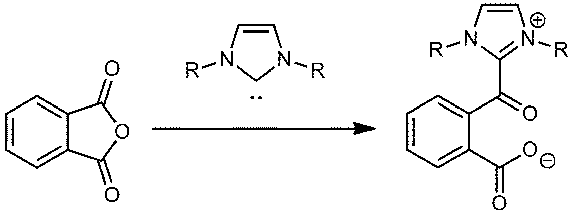

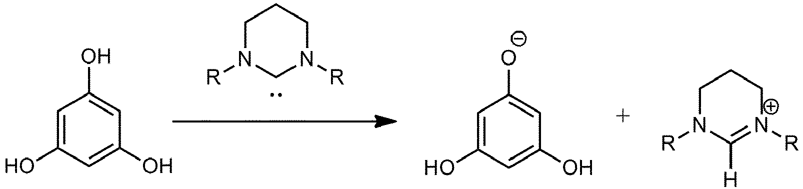

Grundsätzlich ist es, je nach zugrunde gelegter Zielsetzung bei der Verwirklichung vorliegender Erfindung, möglich, auch weitere reaktive Bestandteile in die polymerisierbare Reaktionsmischung einzubeziehen, dies insbesondere in Form von Reaktivverdünnern, insbesondere Monoglycidylether und/oder Polyglycidylether. Auch ist es möglich, weitere nicht-reaktive Bestandteile der erfindungsgemäßen polymerisierbaren Reaktionsmischung einzubeziehen. Hierbei kann es sich vorzugsweise handeln um Lösungsmittel, insbesondere von Tetrahydrofuran, Toluol und/oder Dimethylsulfoxid, von nanoskaligen oder mikroskaligen anorganischen oder organischen Stoffen, insbesondere von nano- und mikroskaligen Metalloxiden, insbesondere in Form von SiO₂, Al₂O₃, TiO₂ oder ZrO₂, sowie von entsprechenden organischen oberflächenmodifizierten Metalloxiden, verstärkenden Elementen, insbesondere textilen Gebilden, vorliegen. Vorteile können damit verbunden sein, dass die textilen Gebilde in Form von Endlosfasern, Kurz- oder Stapelfasern, Garnen und/oder textilen Flächengebilden vorliegen. Mit Vorteilen ist es regelmäßig verbunden, dass die textilen Flächengebilde als Gewebe, Wirkware, Strickware, Geflecht, Gelege, Wicklung oder als Vliesstoff vorliegen.

Die Erfindung unterliegt bezüglich der zwingend einzubeziehenden Reaktionspartner keiner kritischen quantitativen Beschränkung. Es können folgende bevorzugte Angaben gemacht werden: So ist es vorteilhaft, wenn die Reaktionsmischung wenigstens 10 Mol-%, insbesondere wenigstens 30 Mol-% polymerisierbare Epoxidverbindung enthält. Ganz besonders bevorzugt ist es, wenn sie mindestens 50 Mol-%, insbesondere 50 bis 70 Mol-% polymerisierbare Epoxidverbindung enthält. Der Präkatalysator liegt vorzugsweise in einer Menge von 0,01 bis 10 Mol-%, insbesondere von 0,1 bis 1 Mol-%, bezogen auf die polymerisierbare Epoxidverbindung, vor. Des Weiteren ist es bevorzugt, wenn die polymerisierbare Reaktionsmischung mindestens 25 Gew.-%, insbesondere mindestens 50 Gew.-% Epoxidverbindung, bezogen auf die Gesamtmenge an Epoxid und Härter, enthält, abgesehen von der einbezogenen Menge an Präkatalysator und gegebenenfalls weiteren fakultativen Bestandteilen, insbesondere von Lösungsmitteln und sonstigen nicht-reaktiven Zusätzen.

Die Vorteile, die mit der Erfindung verbunden sind, zeigen sich auch insbesondere darin, dass die Reaktionsmischung zur Herstellung von Thermoplasten oder Duroplasten von Epoxidharzen herangezogenen werden kann, insbesondere gilt dies bei Härtungstemperaturen von 75°C bis 145°C, insbesondere von 100°C bis 140°C. Die spezielle Verfahrenstechnologie ist hierbei nicht bedeutsam. Vorteile können jedoch dadurch erreicht werden, wenn die erfindungsgemäße Reaktionsmischung zur Herstellung von Epoxidharzen im Rahmen eines Reaction-Injection-Moulding-Verfahrens (RIM), eines Resin-Transfer-Moulding-Verfahrens (RTM), eines Resin-Infusion-Verfahrens oder einer reaktiven Extrusion, insbesondere zur Herstellung von auf härtbaren Epoxidverbindungen basierenden Beschichtungen, Klebstoffen, Dichtstoffen, Verbundwerkstoffen, insbesondere unter Einbezug textiler Gebilde, Formkörpern, insbesondere von porösen Formkörpern, und Schäumen, herangezogen wird.

Mit der Erfindung sind vielfältige Vorteile verbunden, wie sie bereits aus obiger Darstellung erkennbar sind. Es werden vorteilhaft thermisch labile, geschützte N-heterocyclische Carbene (NHCs) eingesetzt. Die Bandbreite dieser Präkatalysatoren umfasst insbesondere Imidazolium-, Imidazolinium-, Tetrahydropyrimidinium- und Diazepinium-Verbindungen. Es lassen sich hierbei vorteilhafte Schutzgruppen einsetzen, wie vorstehend beschrieben, so beispielsweise CO₂, CS₂ und Metallsalze bzw. Lewis-Säuren bzw. es lassen sich Strukturen herstellen, wie sie der vorstehend genannten Formel (I) entsprechen. So kann mit der vorliegenden Erfindung ein 1-Komponenten-System realisiert werden, das es erlaubt, vorgefertigte Reaktionsmischungen Epoxidverbindung/Präkatalysator/Härter zu einem beliebigen Zeitpunkt allein durch Anhebung der Temperatur zu polymerisieren. Dies kann im Rahmen der oben bereits angesprochenen vorteilhaften Verfahren, insbesondere durch das Reaction-Injection-Moulding (RIM) und das Resin-Transfer-Moulding (RTM), erfolgen. Darüber hinaus kann die Polymerisation metallfrei erfolgen, wenn Präkatalysatoren, wie beispielsweise NHC-CO₂ oder NHC-CS₂ verwendet werden. Werden Metallsalze als Schutzgruppen verwendet, so können diese durch ihre Funktion als Lewis-Säuren die Polymerisation beschleunigen. Die erfindungsgemäß eingesetzten geschützten N-hetero-cyclischen Carbene führen also zu den erwähnten Vorteilen. Grundsätzlich können die erfindungsgemäß herangezogenen N-heterocyclischen Carbene ohne Aktivitätsverlust gelagert, insbesondere auch in den erfindungsgemäßen polymerisierbaren Reaktionsmischungen. Sie fallen im Übrigen *per se* als Pulver oder kristalline Feststoffe an, die problemlos mit den relevanten Ausgangsmaterialien der erfindungsgemäßen polymerisierbaren Reaktionsmischung vermischt und verpackt werden.

Wie bereits angesprochen, bietet die Verwendung geschützter N-heterocyclischer Carbene im Rahmen des erfindungsgemäßen Polymerisationsverfahrens in der praktischen Umsetzung große Vorteile. Erst dann, wenn die aktive Spezies beispielsweise aus den CO₂- und Metall-NHC-Komplexen gebraucht wird, d.h. die Mischung polymerisiert werden soll, erfolgt dies durch Anhebung der Temperatur. Die geschützten N-heterocyclischen Carbene können problemlos mit den weiteren Reaktionspartnern vermischt, d.h. mit der jeweiligen Epoxidverbindung und dem jeweiligen Härter/Vernetzer, und als polymerisationsbereite reaktionsbereite Mischung verpackt werden.

Ein besonderer Vorteil der Erfindung liegt darin, dass sie sehr variabel ist und im Hinblick auf den gewünschten Polymerisationsablauf vorteilhaft gesteuert werden kann, d.h. beispielsweise Verbindungen der Formel (II) herangezogen werden, bei denen die Schutzgruppe auf Lewis-Säuren zurückgeht.

Werden Metalle als Schutzgruppen verwendet, so könnten diese durch ihre Funktion als Lewis-Säuren die Polymerisation beschleunigen, beispielsweise durch eine Erhöhung der Elektrophilie von Epoxid-Funktionalitäten oder von Carbonylgruppen in Anhydrid-Härtern.

Es wurde gefunden, dass bei Reaktionstemperaturen um 140°C und beispielsweise einem Verhältnis von Katalysator zu Epoxyverbindung (Bisphenol-A-diglycidylether, BADGE) zu Härter von 1:100:200 oder 1:1000:2000 (Mol-%) innerhalb weniger Minuten eine vernetzte Polymerisationsmasse resultiert. Die Aushärtungsgeschwindigkeit hängt hierbei vom verwendeten Präkatalysator ab. Es ist zu unterstreichen, dass die Härtung binnen kurzer Zeit abläuft und spätestens nach 45 min beendet ist, in einigen Fällen nach 20 min, in den meisten Fällen nach Zeiten deutlich unter 10 min oder unter 5 min. Die beschriebene Erfindung stellt somit einen erheblichen Fortschritt im Vergleich zu publizierten Systemen dar, vor allem was Handhabbarkeit, Latenz und Stabilität (im Vergleich zu freien Carbenen) sowie die erforderlichen Reaktionszeiten und Reaktionstemperaturen betrifft (im Vergleich zu latenten tertiären Aminen wie 1,3-Dialkylimidazolium-Salzen).

Wie bereits oben gezeigt, können der erfindungsgemäßen Reaktionsmischung mit Vorteil Additive beigefügt werden. Über die oben vorgenommene Aufzählung hinaus sei auf folgende mögliche Bestandteile der Reaktionsmischung verwiesen, die zu vorteilhaften Ergebnissen führen können: anorganische oder organische Füllstoffe, wie Farbstoffe, Pigmente oder auch Faser-basierte Füllstoffe, wie Kurz- oder Langfasern, Fasergelege oder -gewebe, zum Beispiel auf Basis von Glas-, Basalt-, Aramid-, Polybenzoxazol-, Polyamid-, Polyester- oder Carbonfasern. Schließlich ist die Erfindung sehr variabel im Hinblick auf die Wahl der eingesetzten Härter/Vernetzer. Bevorzugte diesbezügliche Substanzen wurden vorstehend bezeichnet. Die Variabilität der Erfindung zeigt sich darin, dass hier eingesetzt werden können: Phenolharze, insbesondere Novolacke, ebenso mehrwertige Alkohole oder Phenole, beispielsweise Phloroglucinol (1,3,5-Trihydroxy-benzol), Anhydrid-basierte Härter, wie beispielsweise Phthalsäureanhydrid, hydrierte und substituierte Derivate von Phthalsäureanhydrid, Trimellitsäureanhydrid oder Benzophenontetracarbonsäuredianhydrid. Besondere Vorteile sind mit Mischungen verbunden, die den Präkatalysator, Bisphenol-A-diglycidylether oder Bisphenol-F-diglycidylether einbeziehen. Eine bevorzugte Zusammensetzung der erfindungsgemäßen Reaktionsmischung, die zu besonderen Vorteilen führt, enthält insbesondere 0,1 bis 1,0 Mol-% latente NHC-Verbindung, 30 bis 70 Mol-% Epoxidverbindung und entsprechend 70 bis 30 Mol-% Härter, insbesondere ohne Lösungsmittel.

Die Erfindung soll nachfolgend anhand von Beispielen noch näher erläutert werden. Dabei handelt es sich einerseits um Beispiele, die die Herstellung bevorzugt einsetzbarer N-heterocyclischer Carbene bzw. Präkatalysatoren betrifft, andererseits um solche Beispiele, bei denen diese eingesetzt werden, um bei Temperaturerhöhung die erfindungsgemäße Reaktionsmischung zu polymerisieren.

### Beispiel 1 (Synthesebeispiele für die Präkatalysatoren^{[15,16,17,19,20,21]})

### Allgemeine Arbeitsvorschrift zur Synthese der NHC-Carboxylate I (AAV I):

1,7 mmol der NHC-Präkursorverbindung wurden in 15 mL THF gelöst oder suspendiert. Hierzu wurde eine Lösung von Kaliumhexamethyldisilizan (KHMDS) in THF getropft (5 mL; 1 Äquivalent). Es wurde 45 min bei Raumtemperatur gerührt und danach das Lösungsmittel per Vakuum bis zur Trockene entfernt. Der Rückstand wurde in ca. 50 mL Diethylether aufgeschlämmt und filtriert. Die klare, farblose bis gelbe Lösung wurde daraufhin in einem Schlenk-Kolben aus der Glove-Box entnommen. Bei Eiskühlung wurde CO₂-Gas durch einen Hahn für 5-15 min zugeführt. Der schnell ausfallende, weiße Feststoff wurde in der Glove-Box per Filtration abgetrennt und mit Diethylether gewaschen und danach im Vakuum getrocknet. Falls nötig, wurde aus Dichlormethan/Pentan umkristallisiert.

### Allgemeine Arbeitsvorschrift zur Synthese der NHC-Carboxylate II (AAV II):

1,75 mmol der NHC-Präkursorverbindung wurden in 15 mL Toluol suspendiert. Lithiumhexamethyldisilizen (LiHMDS) (1 Äquivalent) wurde in 2 mL Toluol gelöst und zugetropft. Die Reaktionsmischung wurde 2,5 h bei Raumtemperatur gerührt und anschließend filtriert. Die klare, farblose bis gelbe Lösung wurde daraufhin in einem Schlenk-Kolben aus der Glove-Box entnommen. Bei Eiskühlung wurde CO₂-Gas durch einen Hahn für 5 bis 15 min zugeführt. Der schnell ausfallende, weiße Feststoff wurde in der Glove-Box per Filtration abgetrennt und mit Pentan gewaschen und danach im Vakuum getrocknet. Falls nötig, wurde aus Dichlormethan/Pentan umkristallisiert.

### Allgemeine Arbeitsvorschrift zur Synthese der NHC-Carboxylate III (AAV III):

25 mmol der NHC-Präkursorverbindung wurden in 50 mL THF gelöst oder suspendiert. Kalium-tert-butanolat (KOtBu) (ca. 1,2 Äquivalente) wurde in 15 mL THF gelöst und zugetropft. Nach 2h Rühren bei RT wurde filtriert. Die Lösung wurde in einem Schlenk-Kolben aus der Glove-Box entnommen. Bei Eiskühlung wurde CO₂-Gas durch einen Hahn für 5 bis 15 min zugeführt. Der schnell ausfallende, weiße Feststoff wurde in der Glove-Box per Filtration abgetrennt und mit Diethylether gewaschen und danach im Vakuum getrocknet. Falls nötig, wurde aus Dichlormethan/Pentan umkristallisiert.

### 1,3-Diisopropyl-tetrahydropyrimidinium-2-carboxylat (1o)

Ansatzgröße 24 mmol, 80% Ausbeute. Nach AAV III.

### 1,3-Dicyclohexyl-tetrahydropyrimidinium-2-carboxylat (1q)

Ansatzgröße 2 mmol, 53% Ausbeute. Nach AAV I.
¹H-NMR (CD₂Cl₂, δ): 3,88 (m, 2H), 3,23 (t, ³J = 6,0 Hz, 4H), 1,01-1,97 (m, 22H); ¹³C-NMR (CD₂Cl₂, δ): 162,4, 159,6, 62,5, 39,1, 30,4, 25,8, 25,7, 20,2; IR (KBr, cm⁻¹): 2935 (s), 2858 (s), 1664 (s), 1585 (s), 1448 (m), 1308 (s), 1057 (s); HRMS (ESI) m/z ber. für C₁₇H₂₈N₂O₂ = 292,2151; gef.: 315,2043 [M + Na]⁺.

### 1,3-Di(4-heptyl)-tetrahydropyrimidinium-2-carboxylat (1p)

Ansatzgröße 2 mmol, 36% Ausbeute. Nach AAV I.
¹H-NMR (CD₂Cl₂, δ): 3,95 (m, 2H), 3,13 (t, ³J = 5,8 Hz, 4H), 1,98 (m, 2H), 1,39-1,56 (m, 12H), 1,14-1,39 (m, 4H), 0,092 (t, ³J = 7,0 Hz, 12H); ¹³C-NMR (CD₂Cl₂, δ): 163,7, 159,1, 63,3, 37,8, 35,1, 19,9, 19,8, 14,4; IR (KBr, cm⁻¹): 2952 (s), 2904 (s), 2870 (s), 1664 (s), 1599 (s), 1466 (m), 1325 (s), 1300 (s), 762 (s); HRMS (ESI) m/z ber. für C₁₉H₃₆N₂O₂ = 324,2777; gef.: 347,2669 [M + Na]⁺.

### 1,3-Bis-(2,4,6-trimethylphenyl)-tetrahydropyrimidinium-2-carboxylat (1r)

Ansatzgröße 5 mmol, 80% Ausbeute. Nach AAV III.

### 1,3-Bis-(2,6-diisopropylphenyl)tetrahydropyrimidinium-2-carboxylat (1s)

Ansatzgröße 1,75 mmol, 21% Ausbeute. Nach AAV II.
¹H-NMR (CDCl₃, δ): 7,43 (t, ³*J* = 7,8 Hz, 2H), 7,25 (d, ³*J* = 7,8 Hz, 4H), 4,23 (t, ³*J* = 5,7 Hz, 4H), 3,04 (sept., ³*J* = 6,8 Hz, 4H), 2,81 (q, ³*J* = 5,9 Hz, 2H), 1,37 (d, ³*J* = 6,8 Hz, 12H), 1,23 (d, ³*J* = 6,8 Hz, 12H); ¹³C-NMR (CDCl₃, δ): 145,8, 136,0, 131,4, 125,3, 49,3, 29,0, 25,0, 19,5.

### 1.3-Diisopropyl-imidazolium-2-carboxylat (1g)

Ansatzgröße 2,65 mmol, 77% Ausbeute. Nach AAV II.

### 1,3-Ditertbutyl-imidazolium-2-carboxylat (1h)

Ansatzgröße 1,68 mmol, 83 % Ausbeute. Nach AAV I.

### 1,3-Dicyclohexyl-imidazolium-2-carboxylat (1i)

Ansatzgröße 1,56 mmol, 75% Ausbeute. Nach AAV I.

### 1,3-Bis-(2,4,6-trimethylphenyl)imidazolinium-2-carboxylat (1l)

Ansatzgröße 1,8 mmol, Ausbeute 60%. Nach AAV II.

### 1,3-Dicyclohexyl-imidazolium-2-carboxylat (1j)

Ansatzgröße 2,98 mmol, Ausbeute 46%. Nach AAV II.

### 1,3-Bis-(2,4,6-trimethylphenyl)tetrahydro-[1.3]-diazepinium-2-carboxylat (1u)

Ansatzgröße 1,25 mmol, 32% Ausbeute. Nach AAV I.
¹H-NMR (CD₂Cl₂, δ): 6,92 (s, 4H), 3,99 (m, 4H), 2,48 (s, 12H), 2,40 (m, 4H), 2,27 (s, 6H); ¹³C-NMR (CD₂Cl₂, δ): 169,1, 157,7, 140,1, 139,6, 136,0, 130,2, 54,2, 25,1, 21,3, 18,8.

### 1,3-Bis-(2,6-diisopropylphenyl)-tetrahydro-[1,3]-diazepinium-2-carboxylat (1v)

Ansatzgröße 1,54 mmol, 29% Ausbeute. Nach AAV I.
¹H-NMR (CD₂Cl₂, δ): 7,34 (t, ³*J* = 7,8 Hz, 2H), 7,18 (d, ³*J* = 7,8 Hz, 4H), 4,05 (m, 4H), 3,23 (sept., ³*J* = 6,8 Hz, 4H), 2,41 (m, 4H), 1,41 (d, ³*J* = 6,8 Hz, 12H), 1,28 (d, ³*J* = 6,8 Hz, 12H); ¹³C-NMR (CD₂Cl₂, δ): 169,0, 156,9, 146,6, 140,2, 130,1, 125,2, 55,5, 30,1, 26,1, 25,0, 23,7.

### SnCl₂(1,3-dimesitylimidazolinium-2-yliden) (1w)

514 mg 1,3-Dimesitylimidazoliniumchlorid (1,5 mmol) wurden in 20 mL THF suspendiert. Nach Zugabe von 1 eq. Kaliumhexamethyldisilizan (KHMDS) (300 mg) wurde 70 min bei RT gerührt. Die entstandene orangefarbene, wenig trübe Lösung wurde mittels Vakuum zur Trockene eingeengt und dann mit Diethylether aufgeschlämmt. Nach Filtration wurde in die gelbe, klare Lösung direkt SnCl₂ gegeben (284 mg; 1 eq.) und über Nacht bei RT gerührt. Es bildete sich eine milchige Suspension, aus der der Feststoff durch Filtration isoliert wurde. Dieser wurde anschließend in Dichlormethan aufgenommen, abermals filtriert und mit Diethylether überschichtet. Nach einigen Stunden Lagerung bei -36°C bildeten sich farblose Kristalle. Die überstehende Lösung wurde entfernt und das Produkt mit Diethylether gewaschen und im Vakuum getrocknet. 50% Ausbeute.

### Beispiel 2 (Polymerisationen)

Katalysator, Bisphenol-A-digylcidylether (BADGE; erhältlich bei Aldrich als D.E.R. 332) und Härter wurden vermengt und in der Glove Box in ein Polymerisationsgefäß überführt. Dieses wurde dann mit einem vorgeheizten Ölbad auf die gewünschte Temperatur gebracht, wobei entweder unter Schutzgas oder an Luft gearbeitet wurde. Nach Ablauf der Reaktionszeit wurde das Gefäß mit ausgehärteter Masse aus dem Ölbad entnommen und analysiert.

Verwendete Härter: Phthalsäureanhydrid (PSA), Phloroglucinol (PhG), Dicyandiamid (DD).

Sämtliche Chemikalien sind kommerziell erhältlich und wurden ohne weitere Aufreinigung verwendet.

### Beispiel 2-1:

1,26 g Bisphenol-A-diglycidylether (BADGE, 3,7 mmol), 1,1 g Phthalsäureanhydrid (PSA, 7,4 mmol) und 7,9 mg des Initiators **1o** (0,037 mmol) wurden unter Schutzgas vermengt und in einem Schlenkkolben mit einem vorgeheizten Ölbad auf 140°C gebracht und 45 min bei dieser Temperatur gehalten. Nach bereits 3 min war die Mischung so weit erstarrt, dass kein Rühren mehr möglich war. Nach Ablauf der Härtungszeit wurde auf Raumtemperatur abgekühlt und das Produkt durch thermische Analyse (DSC) untersucht (T_{g} = 173°C; Tab. 1, Eintrag 3).

### Beispiel 2-2:

630 mg Bisphenol-A-diglycidylether (BADGE, 1,85 mmol), 550 mg Phthalsäureanhydrid (PSA, 3,7 mmol) und 1,5 mg des Initiators **1o** (0,007 mmol) wurden unter Schutzgas vermengt und in einem offenen Glasgefäß mit einem vorgeheizten Ölbad auf 140°C gebracht und 45 min bei dieser Temperatur gehalten. Nach 6 min war die Mischung soweit erstarrt, dass kein Rühren mehr möglich war. Nach Ablauf der Härtungszeit wurde auf Raumtemperatur abgekühlt und das Produkt durch thermische Analyse (DSC) untersucht (T_{g} = 175°C; Tab. 1, Eintrag 5).

### Beispiel 2-3:

630 mg Bisphenol-A-diglycidylether (BADGE, 1,85 mmol), 550 mg Phthalsäureanhydrid (PSA, 3,7 mmol) und 9,5 mg des Initiators **1y** (0,0185 mmol) wurden unter Schutzgas vermengt und in einem offenen Glasgefäß mit einem vorgeheizten Ölbad auf 140°C gebracht und 45 min bei dieser Temperatur gehalten. Nach 7 min war die Mischung soweit erstarrt, dass kein Rühren mehr möglich war. Nach Ablauf der Härtungszeit wurde auf Raumtemperatur abgekühlt und das Produkt durch thermische Analyse (DSC) untersucht (T_{g} = 175°C; Tab. 1, Eintrag 10).

### Beispiel 2-4:

630 mg Bisphenol-A-diglycidylether (BADGE, 1,85 mmol), 550 mg Phthalsäureanhydrid (PSA, 3,7 mmol) und 9,5 mg des Initiators **1h** (0,0185 mmol) wurden unter Schutzgas vermengt und in einem offenen Glasgefäß an Luft über Nacht aufbewahrt. Mit einem vorgeheizten Ölbad auf 140°C gebracht, wobei ein Aufschmelzen immer noch möglich war, und 45 min bei dieser Temperatur gehalten. Nach 4 min war die Mischung soweit erstarrt, dass kein Rühren mehr möglich war. Nach Ablauf der Härtungszeit wurde auf Raumtemperatur abgekühlt und das Produkt durch thermische Analyse (DSC) untersucht (T_{g} = 169°C; Tab. 1, Eintrag 12).

### Charakterisierung

Die Epoxidharze wurden thermisch analysiert (Differential Scanning Calorimetry, DSC). Es wurde ein DSC 4000 von Perkin Elmer verwendet (Software: Pyris). Heiz- und Abkühlraten lagen bei 10°C/min, in einem Scanningbereich von -50°C bis +250°C. Der T_{g} wurde aus der 2. Heizkurve bestimmt.

**Tabelle 1 (Vernetzung von BADGE mit Härtern durch verschiedene NHC-Carboxylate und NHC-Metallkomplexe)**

| Nr. | NHC | T [°C] | Reaktionszeit (Erstarrungszeit) [min] | T_{g} [°C] | NHC:BADGE:Härter (Härter)^{a)} | Kommentar |
|---|---|---|---|---|---|---|
| 1 | ----- | 140 | 45 (-) | - | 0:100:200 (PSA) | Keine Reakt. |
| 2 | ----- | 140 | 45 (-) | - | 0:100:200 (PhG) | Keine Reakt. |
| 3 | **1o** | 140 | 45 (3) | 173 | 1:100:200 (PSA) | Schutzgas |
| 4 | **1o** | 140 | 45 (5) | 147 | 1:100:200 (PSA) | Luft |
| 5 | **1o** | 140 | 45 (6) | 175 | 1:250:500 (PSA) | Luft |
| 6 | **1o** | 140 | 5 (3) | 164 | 1:100:200 (PSA) | Luft |
| 7 | **1o** | 140 | 45 (15) | n. u. | 1:100:130 (PhG) | Luft |
| 8 | **1o** | 140 | 45 (<30) | n. u. | 1:100:200 (DD) | Luft |
| 9 | **1g** | 140 | 45 (6) | n. u. | 1:100:200 (PSA) | Luft |
| 10 | **1y** | 140 | 45 (7) | 175 | 1:100:200 (PSA) | Luft |
| 11 | **1h** | 140 | 45 (4) | 160 | 1:100:200 (PSA) | Luft |
| 12 | **1h** | 140 | 45 (4) | 169 | 1:100:200 (PSA) | Luft (15h) |
| 13 | **1h** | 140 | 45 (6) | 170 | 1:1000:2000 (PSA) | Luft |

| | | | | | | |
|---|---|---|---|---|---|---|
| Anmerkungen: a) Verhältnisse in Mol-%; n.u. = nicht untersucht; PSA = Phthalsäureanhydrid; PhG = Phlorocinol; DD = Dicyandiamid | | | | | | |

Wie in Tab. 1 ersichtlich, werden die Reaktionen nicht durch Luft/atmosphärische Bedingungen gestört. Bei Raumtemperatur liegt Latenz vor. Die gemessenen Glasübergangstemperaturen sind mit denen von konventionell produzierten Epoxidharzen vergleichbar: eine von Ciba-Geigy durchgeführte Versuchsreihe von BADGE/PSA-Härtungen bei 140°C/14h fand Glasübergangstemperaturen in einem Bereich von 50 bis 172°C, wobei hohe T_{g}-Werte auf einen hohen Vernetzungsgrad schließen lassen. Die Werte in Tab. 1 liegen im oberen Bereich dieser Messergebnisse und erlauben den Rückschluss auf eine weit fortgeschrittene Vernetzung bei der Reaktion von Epoxid und Härter beim Einsatz der latenten Verbindungen die in dieser Schrift beschrieben werden.

### Literaturliste

[1] Odian, G. Principles of Polymerization (Fourth Edition); Wiley-Interscience (2004).
[2] Diss. M. Wissert, Freiburg, 2011.
[3] Steimann, B. J. Appl. Polym. Sci. 1990, 39, 2005-2026.
[4] Imbernon, L.; Pire, M.; Oikonomou, E. K.; Norvez, S. Macromol. Chem. Phys. 2013, 214, 806-811.
[5] Kowalczyk, K.; Spychaj, T. Polimery, 2003, 48, 833-835.
[6] Sun, Y.; Zhang, Z.; Wong, C. P. J. Adhes. Sci. Technol., 2003, 18, 109-121.
[7] Maka, H.; Spychaj, T.; Pilawka, R. Ind. Eng. Chem. Res. 2012, 51, 5197-5206.
[8] Riccardi, F.; Romanchick, W. A.; Joullié, M. M. J.Polym. Sci.: Polym. Lett. Ed., 1983, 21, 633-638.
[9] Higgins, E. M.; Sherwood, J. A.; Lindsay, A. G.; Armstrong, J.; Massey, R. S.; Alder, R. W.; O'Donoghue, A. C.: Chem. Commun. 2011, 1559-1561.
[10] Raynaud, J.; Absalon, C.; Gnanou, Y.; Taton, D. J. Am. Chem. Soc. 2009, 131, 3201-3209.
[11] Raynaud, J.; Ottou, W. N.; Gnanou, Y.; Taton, D. Chem. Commun. 2010, 46, 3203-3205.
[12] Pinaud, J.; Vijayakrishna, K.; Taton, D.; Gnanou, Y. Macromolecules 2009, 42, 4932-4936.
[13] Scholten, M. D.; Hedrick, J. L.; Waymouth, R. M. Macromolecules 2008, 41, 7399-7404.
[14] Zhang, Y.; Chen, E. Y.-X. Angew. Chem. 2012, 124, 2515-2519.
[15] Bantu, B.; Pawar, G. M.; Decker, U.; Wurst, K.; Schmidt, A. M.; Buchmeiser, M. R., Chem. Eur. J. 2009, 3103-3109.
[16] Bantu, B.; Pawar, G. M.; Wurst, K.; Decker, U.; Schmidt, A. M.; Buchmeiser, M. R., Eur. J. Inorg. Chem. 2009, 1970-1976.
[17] Naumann, S.; Schmidt, F. G.; Schowner, R.; Frey, W.; Buchmeiser, M. R. Polym. Chem., 2013, 4, 2731-2740.
[18] Iglesias, M.; Beetstra, D. J.; Knight, J. C.; Ooi, L.-L.; Stasch, A.; Coles, S.; Male, L.; Hursthouse, M. B.; Cavell, K. J.; Dervisis, A.; Fallis, I.A. Organometallics 2008, 27, 3279-3289.
[19] van Ausdall, B. R.; Glass, J. L.; Wiggins, K. M.; Aarif, A. M.; Louie, J. J. Org. Chem., 2009, 74, 7935.
[20] Mignani, G.; Pevere, V.; Preparation of carbene-CO₂ adducts for CO₂ extraction, Rhodia Operations, WO 2009050410.
[21] Le Gall, T.; Baltatu, S.; Collins, S. K. Synthesis, 2011, 22, 3687.

## Patentansprüche

1. Polymerisierbare Reaktionsmischung zur Herstellung von Epoxidharzen mit einem Gehalt an polymerisierbaren monomeren, oligomeren oder präpolymeren Epoxidverbindungen, an Polymerisationskatalysatoren, an Härtern und gegebenenfalls weiteren Additiven, **dadurch gekennzeichnet, dass** die Polymerisationskatalysatoren Präkatalysatoren in Form von thermisch-reaktivierbaren geschützten N-heterocyclischen Carbenen vorliegen, umfassend
**1.)** Verbindungen der allgemeinen Formel (Ia) oder (Ib): 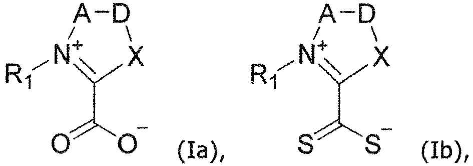 worin bedeuten:
R₁ einen geradkettigen oder verzweigten C₁-C₁₀-Alkyl-, insbesondere C₁-C₇-Alkyl-, einen geradkettigen oder verzweigten C₂-C₁₀-Alkenyl-, insbesondere C₂-C₇-Alkenyl-, einen C₃-C₁₂-Cycloalkyl-, insbesondere C₃-C₆-Cycloalkyl-, einen geradkettigen oder verzweigten C₆-C₁₀₀-Polyoxyalkylen-, insbesondere C₆-C₃₀-Polyoxyalkylen-, einen C₆-oder C₁₀-Aryl- oder einen C₄, C₅, C₇-C₉-Hetaryl-Rest,
A und D, unabhängig voneinander, einen Methylen-Rest, CHR₃-, CR₃R₃,-, einen Ethylen-, -CH₂CHR₃-, -CHR₃CHR₃-, -CH₂R₃R₃-, -CHR₃CR₃R₃-, CR₃R₃CR₃R₃-, einen Propylen-, -CH₂CH₂CHR₃-, -CH₂CHR₃CH₂-, -CH₂CH₂CR₃R₃-, -CH₂CHR₃CHR₃-, -CHR₃CH₂CR₃R₃-, -CH₂CHR₃R₃-, -CHR₃-, -CHR₃CH₂CHR₃-, -CHR₃CHR₃CHR₃-, -CH₂CR₃R₃CH₂, -CH₂CHR₃CR₃R₃, -CH₂CR₃R₃CHCR₃, -CHR₃CR₃R₃CHR₃-, -CHR₃CHR₃CR₃R₃-, -CR₃R₃CR₃R₃CH₂-, -CR₃R₃CHR₃CR₃R₃-, -CHR₃CR₃R₃CR₃R₃- oder-CR₃R₃CR₃R₃CR₃R₃-Rest oder
A und D, zusammengenommen, einen Propylen-, C₁-C₂-Phenylen oder einen mit einem C₁-C₁₀-Alkyl-, C₂-C₁₀-Alkenyl-, C₃-C₁₂-Cycloalkyl-, C₆-C₁₀₀-Polyoxyalkylen-, C₆-oder C₁₀-Aryl- oder C₄, C₅, C₇-C₉-Hetaryl-Rest substituierten 1,2-Phenylen-,-CH=N-, -CH₂-NR₂-, Vinylen-, -CH₂=CHR₃-, -CHR₃=CH₂- oder -CHR₃=CHR₃-Rest, wobei die Reste R₃, unabhängig voneinander, die oben für R₁ angegebene Bedeutung haben, und die Alkyl- und Alkenyl-Reste die vorstehend dargestellte bevorzugte Bedeutung haben können, und
X Sauerstoff, Schwefel oder -NR₂'-, wobei R₂' die oben für R₁ angegebene Bedeutung hat,
**2.)** Verbindungen der allgemeinen Formel II mit Lewis-Säuren, insbesondere auf der Basis von Magnesium-, Calcium-, Yttrium-, Lanthan-, Titan-, Zirkonium-, Mangan-, Eisen-, Kobalt-, Zink-, Aluminium-, Zinn-, Bismuth- oder Borkationen mit Anionen aus der Reihe Fluorid, Chlorid, Bromid, Sulfat, Hydrogensulfat, Trifluormethansulfonat, Methansulfonat, Benzolsulfonat, BF₄⁻, PF₆⁻, SbF₆, para-Toluolsulfonat, Trifluoracetat, (C₁-C₁₀-Alkyl)carboxylat, (C₃-C₁₀-cycloalkyl)carboxylat, (C₂-C₁₀-Alkenyl)carboxylat, (C₁-C₁₀-Alkoxy)carboxylat, 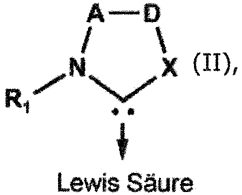 wobei R₁, A, D und X die in Zusammenhang mit den vorstehenden Formeln (Ia) bzw. (Ib) angegebene Bedeutung haben.

2. Reaktionsmischung nach Anspruch 1, **dadurch gekennzeichnet, dass** der geradkettige oder verzweigte C₁-C₁₀-Alkyl-Rest einen Methyl-, Ethyl-, n-Propyl-, iso-Propyl-, tert.-Butyl- oder neo-Pentyl-Rest, der C₃-C₁₂-Cycloalkyl-Rest einen Cyclohexyl-Rest-, der C₆-oder C₁₀-Aryl-Rest einen Phenyl-, 2,6-Dimethylphenyl-, 2,6-Diisopropylphenyl- oder Mesityl-Rest darstellt.

3. Reaktionsmischung nach Anspruch 1 oder 2, **dadurch gekennzeichnet, dass** in den Formeln (Ia), (Ib) und (II) die Reste
R₁, unabhängig voneinander, einen Methyl-, Ethyl-, n-Propyl-, iso-Propyl-, tert.-Butyl-, neo-Pentyl-, iso-Amyl-, Cyclohexyl-, Phenyl-, 2,6-Dimethylphenyl-, 2,6-Diisopropylphenyl- oder Mesityl-Rest,
darstellen und
die Reste A und D, jeweils unabhängig voneinander zusammengenommen, für einen Ethylen-, Vinylen- oder Propylen-Rest stehen.

4. Reaktionsmischung nach mindestens einem der vorhergehenden Ansprüche, **dadurch gekennzeichnet, dass** die Präkatalysatoren durch die Formeln (**1f**) bis (**1C**) dargestellt werden: 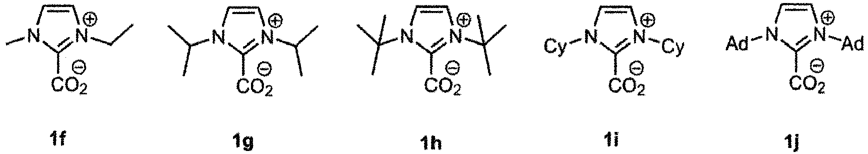 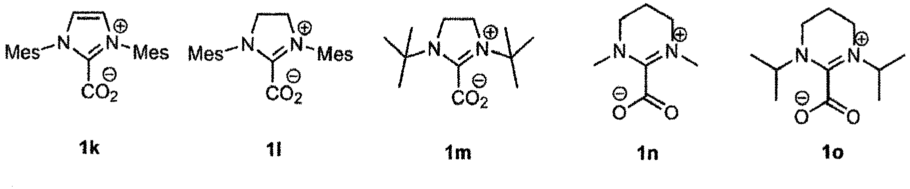 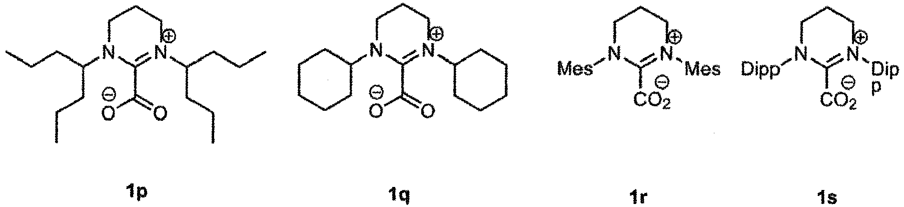 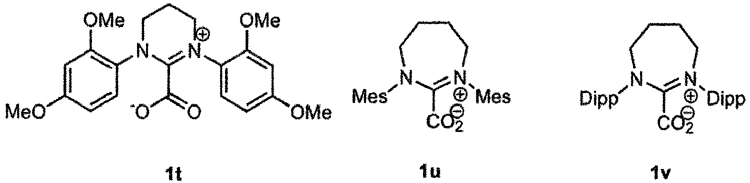 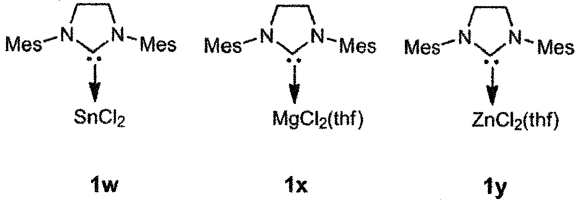 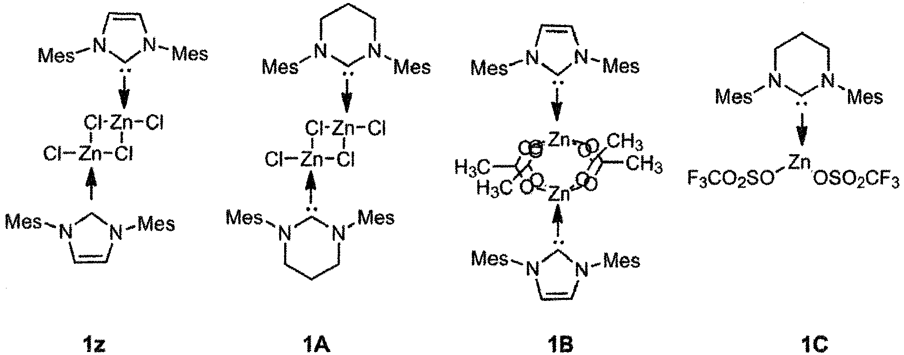 worin Mes einen Mesityl-, Ac einen Acetyl- und Me einen Methyl-Rest bedeuten.

5. Reaktionsmischung nach mindestens einem der vorhergehenden Ansprüche, **dadurch gekennzeichnet, dass** die Präkatalysatoren thermisch aktivierbar sind, insbesondere bei einer Temperatur von mehr als 45°C, insbesondere von mehr als 70°C.

6. Reaktionsmischung Anspruch 5, **dadurch gekennzeichnet, dass** die Präkatalysatoren bei einer Temperatur von 75°C bis 145°C, insbesondere von 100°C bis 145°C, thermisch reaktivierbar sind.

7. Reaktionsmischung nach mindestens einem der vorhergehenden Ansprüche, **dadurch gekennzeichnet, dass** sie polymerisierbare Epoxidverbindungen mit mehreren Epoxy-Gruppen, insbesondere mit 1 bis 8 Epoxy-Gruppen enthält.

8. Reaktionsmischung nach Anspruch 7, **dadurch gekennzeichnet, dass** die polymerisierbaren Epoxidverbindungen 2 bis 4 Epoxy-Gruppen, insbesondere 2 oder 3 Epoxy-Gruppen enthalten.

9. Reaktionsmischung nach mindestens einem der vorhergehenden Ansprüche, **dadurch gekennzeichnet, dass** die polymerisierbaren Epoxidverbindungen ausschließlich oder partiell aromatisch, cycloaliphatisch oder aliphatisch aufgebaut sind.

10. Reaktionsmischung nach mindestens einem der vorhergehenden Ansprüche, **dadurch gekennzeichnet, dass** sie polymerisierbare Epoxidverbindungen enthält, die aus Epichlorhydrin und Alkoholen oder Phenolen, insbesondere Diphenolen, erhältlich sind.

11. Reaktionsmischung nach Anspruch 9 oder 10, **dadurch gekennzeichnet, dass** die polymerisierbare Epoxidverbindung als Glycidylether von bi- oder oligophenolischen Verbindungen oder als hydrierte Derivate von diesen, insbesondere in Form von Bisphenol-A-diglycidylether (BADGE), Bisphenol-F-diglycidylether (BFDGE), Glycidylether von Novolacken, Vinylcyclohexendioxid, 3,4-Epoxy-2-methylcyclohexylmethyl-3,4-epoxy-6-methyl-cyclohexancarboxylat und/oder Dicyclopentadienyldioxid, vorliegt.

12. Reaktionsmischung nach mindestens einem der Ansprüche 1 bis 9, **dadurch gekennzeichnet, dass** die polymerisierbare Epoxidverbindung in Form von Glycidylmethacrylat und/oder 3,4-Epoxycyclohexylmethyl-3,4-epoxycyclohexylcarboxylat vorliegt.

13. Reaktionsmischung nach mindestens einem der vorhergehenden Ansprüche, **dadurch gekennzeichnet, dass** sie Härter (bzw. Vernetzer) enthält.

14. Reaktionsmischung nach Anspruch 13, **dadurch gekennzeichnet, dass** die Härter darstellen: Novolacke, Melaminharze, hydrierte und substituierte Derivate von Phthalsäureanhydrid, insbesondere 3-Methylhexahydrophthalsäureanhydrid oder Hexahydrophthalsäureanhydrid, und Dicyandiamid.

15. Reaktionsmischung nach mindestens einem der vorhergehenden Ansprüche, **dadurch gekennzeichnet, dass** sie weitere reaktive Bestandteile enthält, insbesondere in Form von Reaktivverdünnern, insbesondere Monoglycidylether und/ oder Polyglycidylether.

16. Reaktionsmischung nach mindestens einem der vorhergehenden Ansprüche, **dadurch gekennzeichnet, dass** sie weitere nicht-reaktive Bestandteile enthält.

17. Reaktionsmischung nach Anspruch 16, **dadurch gekennzeichnet, dass** die weiteren nicht-reaktiven Bestandteile in Form von Lösungsmitteln, insbesondere von Tetrahydrofuran, Toluol und/oder Dimethylsulfoxid, von nanoskaligen oder mikroskaligen anorganischen oder organischen Stoffen, insbesondere von nano- und mikroskaligen Metalloxiden, insbesondere in Form von SiO₂, Al₂O₃, TiO₂ oder ZrO₂, sowie von entsprechenden organischen oberflächenmodifizierten Metalloxiden, verstärkenden Elementen, insbesondere textilen Gebilden, vorliegen.

18. Reaktionsmischung nach Anspruch 17, **dadurch gekennzeichnet, dass** die textilen Gebilde in Form von Endlosfasern, Kurz- oder Stapelfasern, Garnen und/oder textilen Flächengebilden vorliegen.

19. Reaktionsmischung nach Anspruch 18, **dadurch gekennzeichnet, dass** die textilen Flächengebilde als Gewebe, Wirkware, Strickware, Geflecht, Gelege, Wicklung oder als Vliesstoff vorliegen.

20. Reaktionsmischung nach mindestens einem der vorhergehenden Ansprüche, **dadurch gekennzeichnet, dass** diese ein 1 K-System oder ein 2 K-System mit gesondert gelagertem Härter darstellt.

21. Reaktionsmischung nach mindestens einem der vorhergehenden Ansprüche, **dadurch gekennzeichnet, dass** sie wenigstens 10 Mol-%, insbesondere wenigstens 30 Mol-% polymerisierbare Epoxidverbindung enthält.

22. Reaktionsmischung nach Anspruch 21, **dadurch gekennzeichnet, dass** sie mindestens 50 Mol-%, insbesondere 50 bis 70 Mol-% polymerisierbare Epoxidverbindung enthält.

23. Reaktionsmischung nach mindestens einem der vorhergehenden Ansprüche, **dadurch gekennzeichnet, dass** sie den Präkatalysator in einer Menge von 0,01 bis 10 Mol-%, insbesondere von 0,1 bis 1 Mol-%, bezogen auf die polymerisierbare Epoxidverbindung, enthält.

24. Reaktionsmischung nach mindestens einem der Ansprüche 13 bis 22, **dadurch gekennzeichnet, dass** die polymerisierbare Reaktionsmischung mindestens 25 Gew.-%, insbesondere mindestens 50 Gew.-% Epoxidverbindung, bezogen auf die Gesamtmenge an Epoxid und Härter, enthält, abgesehen von der einbezogenen Menge an Präkatalysator und gegebenenfalls weiteren fakultativen Bestandteilen, insbesondere von Lösungsmitteln und sonstigen nicht-reaktiven Zusätzen.

25. Verwendung der Reaktionsmischung nach mindestens einem der vorhergehenden Ansprüche, **dadurch gekennzeichnet, dass** sie zur Herstellung von Thermoplasten oder Duroplasten von Epoxidharzen herangezogenen wird, insbesondere bei Härtungstemperaturen von 75°C bis 145°C, insbesondere von 100°C bis 140°C.

26. Verwendung nach Anspruch 25, **dadurch gekennzeichnet, dass** Härtungstemperaturen von 100°C bis 140°C eingestellt werden.

27. Verwendung nach Anspruch 25 oder 26 oder Verwendung der Reaktionsmischung nach mindestens einem der Ansprüche 1 bis 24 zur Herstellung von Epoxidharzen im Rahmen eines Reaction-Injection-Moulding-Verfahrens (RIM), eines Resin-Transfer-Moulding-Verfahrens (RTM), eines Resin-Infusion-Verfahrens oder einer reaktiven Extrusion, insbesondere zur Herstellung von auf härtbaren Epoxidverbindungen basierenden Beschichtungen, Klebstoffen, Dichtstoffen, Verbundwerkstoffen, insbesondere unter Einbezug textiler Gebilde, Formkörpern, insbesondere von porösen Formkörpern, und Schäumen.

## Claims

1. A polymerisable reaction mixture for the production of epoxy resins with a content of polymerisable monomeric, oligomeric or prepolymeric epoxy compounds, polymerisation catalysts, hardeners and possibly further additives, **characterised in that** the polymerisation catalysts are precatalysts in the form of thermally reactivatable protected N-heterocyclic carbenes, comprising
**1.)** compounds of the general formula (Ia) or (Ib): 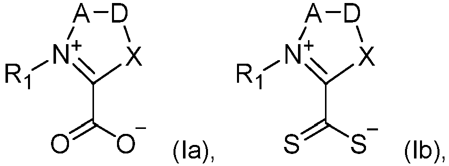 wherein:
R₁ is a straight-chain or branched C₁-C₁₀ alkyl group, especially C₁-C₇ alkyl group, a straight-chain or branched C₂-C₁₀ alkenyl group, especially C₂-C₇ alkenyl group, a C₃-C₁₂ cycloalkyl group, especially C₃-C₆ cycloalkyl group, a straight-chain or branched C₆-C₁₀₀ polyoxyalkylene group, especially C₆-C₃₀ polyoxyalkylene group, a C₆ or C₁₀ aryl group or a C₄, C₅, C₇-C₉ hetaryl group,
A and D, independently of each other, are a methylene group, CHR₃-, CR₃R₃,-, an ethylene group, -CH₂CHR₃-, -CHR₃CHR₃-, -CH₂R₃R₃-, -CHR₃CR₃R₃-, CR₃R₃CR₃R₃-, a propylene group, -CH₂CH₂CHR₃-, -CH₂CHR₃CH₂-, -CH₂CH₂CR₃R₃-,-CH₂CHR₃CHR₃-, -CHR₃CH₂CR₃R₃-, -CH₂CHR₃R₃-, -CHR₃-, -CHR₃CH₂CHR₃-, -CHR₃CHR₃CHR₃-, -CH₂CR₃R₃CH₂, -CH₂CHR₃CR₃R₃, -CH₂CR₃R₃CHCR₃, -CHR₃CR₃R₃CHR₃-, -CHR₃CHR₃CR₃R₃-, -CR₃R₃CR₃R₃CH₂-, -CR₃R₃CHR₃CR₃R₃-, -CHR₃CR₃R₃CR₃R₃- or -CR₃R₃CR₃R₃CR₃R₃ group or
A and D, taken together, are a propylene group, C₁-C₂-phenylene group or a 1,2-phenylene, -CH=N-, -CH₂-NR₂-, vinylene, -CH₂=CHR₃-, -CHR₃=CH₂- or-CHR₃=CHR₃ group substituted with a C₁-C₁₀ alkyl, C₂-C₁₀ alkenyl, C₃-C₁₂ cycloalkyl, C₆-C₁₀₀ polyoxyalkylene, C₆-or C₁₀ aryl or C₄, C₅, C₇-C₉ hetaryl group, wherein the groups R₃, independently of each other, have the meaning given above for R₁, and the alkyl and alkenyl groups may have the preferred meaning illustrated above, and
X is oxygen, sulphur or -NR₂'-, wherein R₂' has the meaning given above for R₁,
**2.)** compounds of the general formula II with Lewis acids, especially on the basis of cations of magnesium, calcium, yttrium, lanthanum, titanium, zirconium, manganese, iron, cobalt, zinc, aluminium, tin, bismuth or boron with anions from the series fluoride, chloride, bromide, sulphate, hydrogen sulphate, trifluoromethanesulphonate, methanesulphonate, benzenesulphonate, BF₄⁻, PF₆⁻, SbF₆, para-toluenesulphonate, trifluoroacetate, (C₁-C₁₀ alkyl)carboxylate, (C₃-C₁₀ cycloalkyl)carboxylate, (C₂-C₁₀ alkenyl)carboxylate, (C₁-C₁₀ alkoxy)carboxylate, 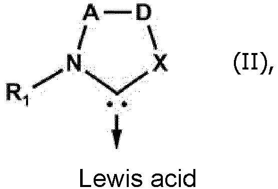 wherein R₁, A, D and X have the meaning given in conjunction with the above Formulae (Ia) or (Ib).

2. A reaction mixture according to Claim 1, **characterised in that** the straight-chain or branched C₁-C₁₀ alkyl group represents a methyl, ethyl, n-propyl, iso-propyl, tert. butyl or neo-pentyl group, the C₃-C₁₂ cycloalkyl group represents a cyclohexyl group, the C₆ or C₁₀ aryl group represents a phenyl, 2,6-dimethylphenyl, 2,6-diisopropylphenyl or mesityl group.

3. A reaction mixture according to Claim 1 or Claim 2, **characterised in that** in Formulae (Ia), (Ib) and (II) the groups
R₁, independently of each other, represent a methyl, ethyl, n-propyl, iso-propyl, tert. butyl, neo-pentyl, iso-amyl, cyclohexyl, phenyl, 2,6-dimethylphenyl, 2,6-diisopropylphenyl or mesityl group, and
the groups A and D, each taken together independently of each other, stand for an ethylene, vinylene or propylene group.

4. A reaction mixture according to at least one of the preceding claims, **characterised in that** the precatalysts are represented by the Formulae (**1f**) to (**1C**): 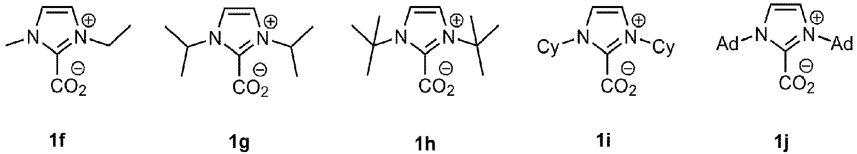 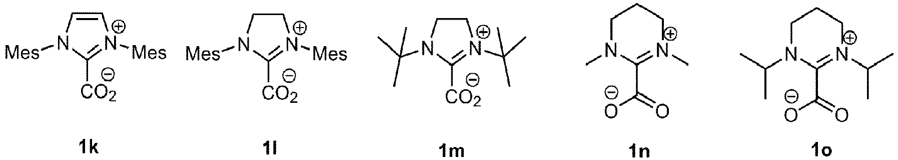 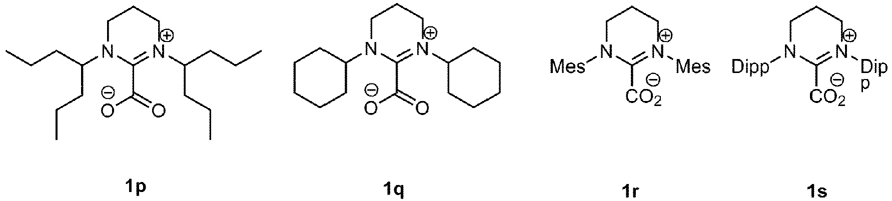 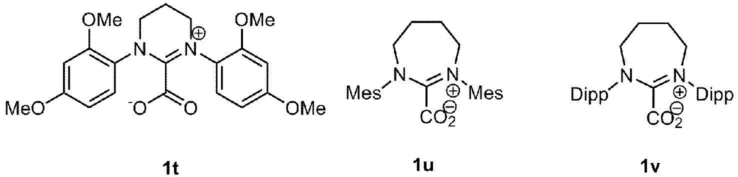 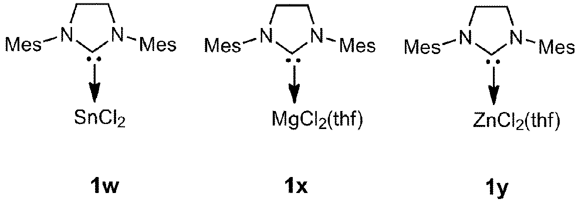 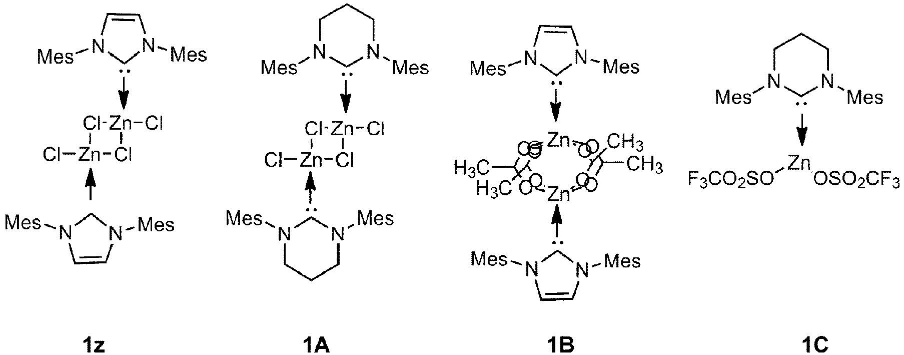 wherein Mes is a mesityl group, Ac an acetyl group and Me a methyl group.

5. A reaction mixture according to at least one of the preceding claims, **characterised in that** the precatalysts are thermally activatable, especially at a temperature of more than 45°C, especially of more than 70°C.

6. A reaction mixture according to Claim 5, **characterised in that** the precatalysts are thermally reactivatable at a temperature of 75°C to 145°C, especially of 100°C to 145°C.

7. A reaction mixture according to at least one of the preceding claims, **characterised in that** it contains polymerisable epoxy compounds with a plurality of epoxy groups, especially with 1 to 8 epoxy groups.

8. A reaction mixture according to Claim 7, **characterised in that** the polymerisable epoxy compounds contain 2 to 4 epoxy groups, especially 2 or 3 epoxy groups.

9. A reaction mixture according to at least one of the preceding claims, **characterised in that** the polymerisable epoxy compounds are of exclusively or partially aromatic, cycloaliphatic or aliphatic structure.

10. A reaction mixture according to at least one of the preceding claims, **characterised in that** it contains polymerisable epoxy compounds which are obtainable from epichlorohydrin and alcohols or phenols, especially diphenols.

11. A reaction mixture according to Claim 9 or Claim 10, **characterised in that** the polymerisable epoxy compound is in the form of glycidyl ethers of biphenolic or oligophenolic compounds or as hydrogenated derivatives thereof, especially in the form of bisphenol-A diglycidyl ether (BADGE), bisphenol-F diglycidyl ether (BFDGE), glycidyl ethers of novolaks, vinylcyclohexene dioxide, 3,4-epoxy-2-methylcyclohexylmethyl-3,4-epoxy-6-methyl-cyclohexane carboxylate and/or dicyclopentadienyl dioxide.

12. A reaction mixture according to at least one of Claims 1 to 9, **characterised in that** the polymerisable epoxy compound is in the form of glycidyl methacrylate and/or 3,4-epoxycyclohexylmethyl-3,4-epoxycyclohexyl carboxylate.

13. A reaction mixture according to at least one of the preceding claims, **characterised in that** it contains hardeners (or cross-linking agents).

14. A reaction mixture according to Claim 13, **characterised in that** the hardeners represent: novolaks, melamine resins, hydrogenated and substituted derivatives of phthalic anhydride, especially 3-methylhexahydrophthalic anhydride or hexahydrophthalic anhydride, and dicyandiamide.

15. A reaction mixture according to at least one of the preceding claims, **characterised in that** it contains further reactive constituents, especially in the form of reactive thinners, especially monoglycidyl ethers and/or polyglycidyl ethers.

16. A reaction mixture according to at least one of the preceding claims, **characterised in that** it contains further non-reactive constituents.

17. A reaction mixture according to Claim 16, **characterised in that** the further non-reactive constituents are in the form of solvents, especially of tetrahydrofuran, toluene and/or dimethyl sulphoxide, of nanoscale or microscale inorganic or organic substances, especially of nanoscale and microscale metal oxides, especially in the form of SiO₂, Al₂O₃, TiO₂ or ZrO₂, and of corresponding organic surface-modified metal oxides, reinforcing elements, especially textile structures.

18. A reaction mixture according to Claim 17, **characterised in that** the textile structures are in the form of filaments, short or staple fibres, yarns and/or textile fabrics.

19. A reaction mixture according to Claim 18, **characterised in that** the textile fabrics are in the form of woven fabric, knitted fabrics, braid, laid fabric, windings or nonwovens.

20. A reaction mixture according to at least one of the preceding claims, **characterised in that** it is a 1C system or a 2C system with separately stored hardener.

21. A reaction mixture according to at least one of the preceding claims, **characterised in that** it contains at least 10 mol%, especially at least 30 mol%, polymerisable epoxy compound.

22. A reaction mixture according to Claim 21, **characterised in that** it contains at least 50 mol%, especially 50 to 70 mol%, polymerisable epoxy compound.

23. A reaction mixture according to at least one of the preceding claims, **characterised in that** it contains the precatalyst in an amount of from 0.01 to 10 mol%, especially from 0.1 to 1 mol%, relative to the polymerisable epoxy compound.

24. A reaction mixture according to at least one of Claims 13 to 22, **characterised in that** the polymerisable reaction mixture contains at least 25 wt.%, especially at least 50 wt.%, epoxy compound, relative to the total amount of epoxide and hardener, apart from the included amount of precatalyst and possibly further optional constituents, especially solvents and other non-reactive additives.

25. Use of the reaction mixture according to at least one of the preceding claims, **characterised in that** it is used for the production of thermoplastics or thermoset materials of epoxy resins, especially at hardening temperatures of 75°C to 145°C, especially of 100°C to 140°C.

26. Use according to Claim 25, **characterised in that** hardening temperatures of 100°C to 140°C are set.

27. Use according to Claim 25 or Claim 26 or use of the reaction mixture according to at least one of Claims 1 to 24 for the production of epoxy resins in a reaction-injection moulding process (RIM), a resin transfer moulding process (RTM), a resin infusion process or a reactive extrusion, especially for the production of coatings, adhesives, sealants, composite materials based on hardenable epoxy compounds, especially including textile structures, moulded parts, especially porous moulded parts, and foams.

## Revendications

1. Mélange réactionnel polymérisable pour la fabrication de résines époxydes ayant une certaine teneur en composés époxydes monomères, oligomères ou prépolymères polymérisables, en catalyseurs de polymérisation, en durcisseurs et éventuellement en d'autres additifs, **caractérisé en ce que** les catalyseurs de polymérisation sont des précatalyseurs se présentant sous forme de carbènes N-hétérocycliques protégés, peuvant subir une activation à la chaleur, comprenant
**1.)** des composés de formule générale (Ia) ou (Ib) : 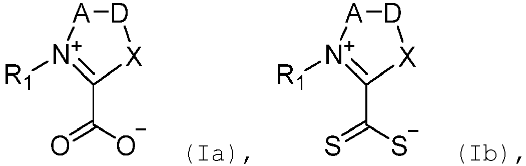 dans lesquelles :
R₁ représente un radical alkyle en C₁-C₁₀, en particulier alkyle en C₁-C₇, à chaîne droite ou ramifiée, alcényle en C₂-C₁₀, en particulier alcényle en C₂-C₇, à chaîne droite ou ramifiée, cycloalkyle en C₃-C₁₂, en particulier cycloalkyle en C₃-C₆, polyoxyalkylène en C₆-C₁₀₀, en particulier polyoxyalkylène en C₆-C₃₀, à chaîne droite ou ramifiée, aryle en C₆ ou C₁₀, ou hétéroaryle en C₄, C₅, C₇ à C₉,
A et D représentent chacun indépendamment de l'autre un radical méthylène, CHR₃-, CR₃R₃-, un radical éthylène, -CH₂CHR₃-, -CHR₃CHR₃-, -CH₂R₃R₃-, -CHR₃CR₃R₃-, CR₃R₃CR₃R₃-, propylène, -CH₂CH₂CHR₃-, -CH₂CHR₃CH₂-, -CH₂CH₂CR₃R₃-, -CH₂CHR₃CHR₃-, -CHR₃CH₂CR₃R₃-, -CH₂CHR₃R₃-, -CHR₃-, -CHR₃CH₂CHR₃-, -CHR₃CHR₃CHR₃-, -CH₂CR₃R₃CH₂, -CH₂CHR₃CR₃R₃, -CH₂CR₃R₃CHCR₃, -CHR₃CR₃R₃CHR₃-, -CHR₃CHR₃CR₃R₃-, -CR₃R₃CR₃R₃CH₂-, -CR₃R₃CHR₃CR₃R₃-, -CHR₃CR₃R₃CR₃R₃- ou -CR₃R₃CR₃R₃CR₃R₃- ou
A et D, pris ensemble, représentent un radical propylène, phénylène C₁-C₂, ou un radical 1,2-phénylène, -CH=N-, -CH₂-NR₂-, vinylène, -CH₂=CHR₃, -CHR₃=CH₂ ou -CHR₃=CHR₃ substitué par un substituant alkyle en C₁-C₁₀, alcényle en C₂-C₁₀, cycloalkyle en C₃-C₁₂, polyoxyalkylène en C₆-C₁₀₀, aryle en C₆ ou en C₁₀, ou hétéroaryle en C₄, C₅, C₇-C₉, les radicaux R₃ ayant, indépendamment les uns des autres, les significations données ci-dessus pour R₁, et les radicaux alkyle et alcényle pouvant avoir les significations préférées données ci-dessus, et
X représente un oxygène, un soufre ou -NR₂' , où R₂' a les significations données ci-dessus pour R₁,
**2.)** des composés de formule générale II avec des acides de Lewis, en particulier à base de cations magnésium, calcium, yttrium, lanthane, titane, zirconium, manganèse, fer, cobalt, zinc, aluminium, étain, bismuth ou bore avec des anions de la série fluorure, chlorure, bromure, sulfate, hydrogénosulfate, trifluorométhane-sulfonate, méthanesulfonate, benzènesulfonate, BF₄⁻, PF₆⁻, SbF₆, paratoluènesulfonate, trifluoracétate, (alkyle en C₁-C₁₀) carboxylate, (cycloalkyle en C₃-C₁₀) carboxylate, (alcényle en C₂-C₁₀)carboxylate, (alkoxy en C₁-C₁₀)-carboxylate, 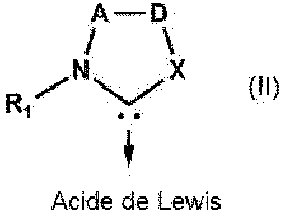 dans laquelle R₁, A, D et X ont les significations données en liaison avec les formules respectivement (Ia) et (Ib) ci-dessus.

2. Mélange réactionnel selon la revendication 1, **caractérisé en ce que** le radical alkyle en C₁-C₁₀ à chaîne droite ou ramifiée représente un radical méthyle, éthyle, n-propyle, isopropyle, tert.-butyle ou néopentyle, le radical cycloalkyle en C₃-C₁₂ représente un radical cyclohexyle, le radical aryle en C₆ ou en C₁₀ représente un radical phényle, 2,6-diméthylphényle, 2,6-diisopropylphényle ou mésityle.

3. Mélange réactionnel selon la revendication 1 ou 2, **caractérisé en ce que**, dans les formules (Ia), (Ib) et (II),
les radicaux R₁ représentent chacun indépendamment des autres un radical méthyle, éthyle, n-propyle, isopropyle, tert.-butyle, néopentyle, isoamyle, cyclohexyle, phényle, 2,6-diméthylphényle, 2,6-diisopropylphényle ou mésityle, et
les radicaux A et D, pris ensemble chacun indépendamment de l'autre, représentent un radical éthylène, vinylène ou propylène.

4. Mélange réactionnel selon au moins l'une des revendications précédentes, **caractérisé en ce que** les précatalyseurs sont représentés par les formules (**1f**) à (**1C**) : 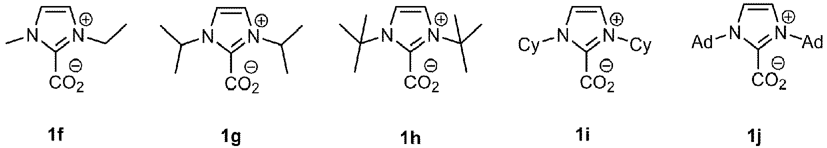 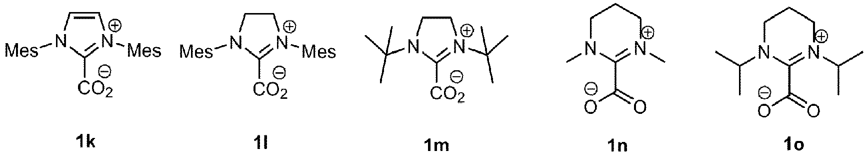 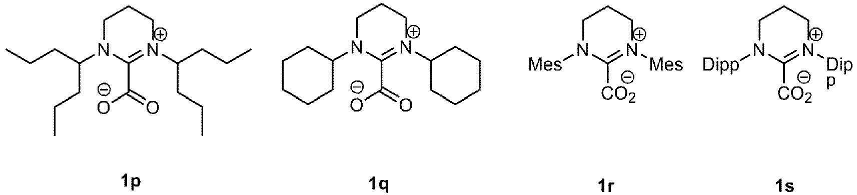 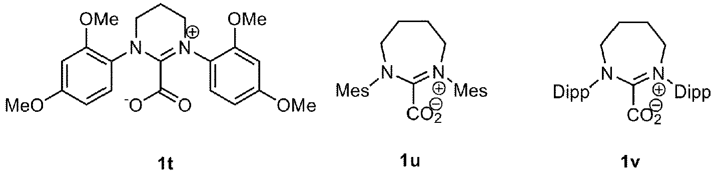 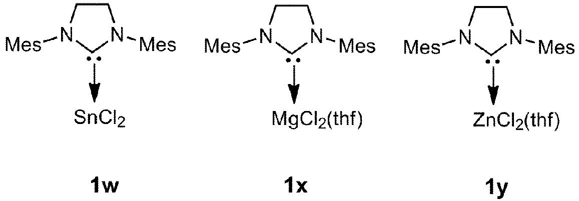 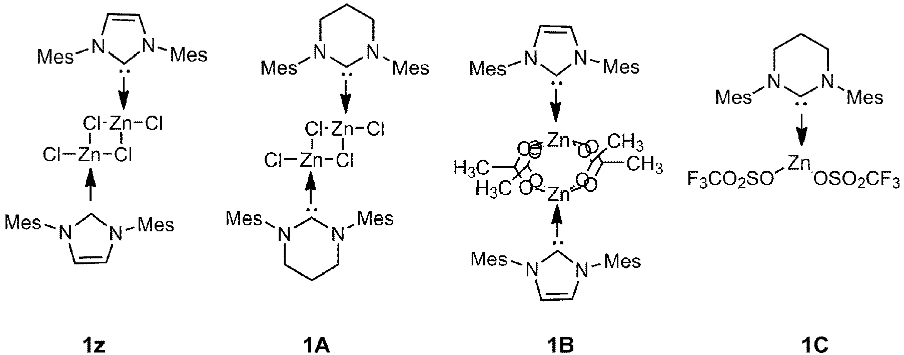 dans lesquelles Mes représente un radical mésityle, Ac un radical acétyle et Me un radical méthyle.

5. Mélange réactionnel selon au moins l'une des revendications précédentes, **caractérisé en ce que** les précatalyseurs peuvent subir une activation à la chaleur, en particulier à une température supérieure à 45°C, en particulier supérieure à 70°C.

6. Mélange réactionnel selon la revendication 5, **caractérisé en ce que** les précatalyseurs peuvent subir une activation à la chaleur à une température de 75°C à 145°C, en particulier de 100°C à 145°C.

7. Mélange réactionnel selon au moins l'une des revendications précédentes, **caractérisé en ce qu'**il contient des composés époxydes polymérisables comportant plusieurs groupes époxy, en particulier 1 à 8 groupes époxy.

8. Mélange réactionnel selon la revendication 7, **caractérisé en ce que** les composés époxydes polymérisables contiennent 2 à 4 groupes époxy, en particulier 2 ou 3 groupes époxy.

9. Mélange réactionnel selon au moins l'une des revendications précédentes, **caractérisé en ce que** les composés époxydes polymérisables ont une structure exclusivement ou partiellement aromatique, cycloaliphatique ou aliphatique.

10. Mélange réactionnel selon au moins l'une des revendications précédentes, **caractérisé en ce qu'**il contient des composés époxydes polymérisables, qui peuvent être obtenus à partir d'épichlorhydrine et d'alcools ou de phénols, en particulier de diphénols.

11. Mélange réactionnel selon la revendication 9 ou 10, **caractérisé en ce que** le composé époxyde polymérisable se présente sous forme de l'éther glycidylique de composés bi- ou oligophénoliques, ou sous forme de dérivés hydrogénés de ces derniers, en particulier sous forme de l'éther diglycidylique du bisphénol A (BADGE), de l'éther diglycidylique du bisphénol F (BFDGE), de l'éther glycidylique de novolaques, du dioxyde de vinylcyclohexène, du 3,4-époxy-6-méthyl-cyclohexanecarboxylate de 3,4-époxy-2-méthylcyclohexylméthyle et/ou du dioxyde de dicyclopentadiényle.

12. Mélange réactionnel selon au moins l'une des revendications 1 à 9, **caractérisé en ce que** le composé époxyde polymérisable se présente sous forme de méthacrylate de glycidyle ou de 3,4-époxycyclohexylcarboxylate de 3,4-époxycyclohexylméthyle.

13. Mélange réactionnel selon au moins l'une des revendications précédentes, **caractérisé en ce qu'**il contient des durcisseurs (ou des agents de réticulation).

14. Mélange réactionnel selon la revendication 13, **caractérisé en ce que** les durcisseurs représentent des novolaques, des résines de mélamine, des dérivés hydrogénés et substitués d'anhydride phtalique, en particulier l'anhydride 3-méthylhexahydrophtalique ou l'anhydride hexahydrophtalique, et du dicyanodiamide.

15. Mélange réactionnel selon au moins l'une des revendications précédentes, **caractérisé en ce qu'**il contient d'autres constituants réactifs, en particulier sous forme de diluants réactifs, en particulier des monoglycidyléthers et/ou des polyglycidyléthers.

16. Mélange réactionnel selon au moins l'une des revendications précédentes, **caractérisé en ce qu'**il contient d'autres constituants non réactifs.

17. Mélange réactionnel selon la revendication 16, **caractérisé en ce que** les autres constituants non réactifs se présentent sous forme de solvants, en particulier de tétrahydrofuranne, de toluène et/ou de diméthylsulfoxyde, de substances inorganiques ou organiques nanométriques ou micrométriques, en particulier d'oxydes métalliques nanométriques ou micrométriques, en particulier sous forme de SiO₂, Al₂O₃, TiO₂ ou ZrO₂, ainsi que d'oxydes métalliques organiques correspondants modifiants de surface, d'éléments de renforcement, en particulier de structures textiles.

18. Mélange réactionnel selon la revendication 17, **caractérisé en ce que** les structures textiles se présentent sous forme de fibres continues, de fibres courtes ou coupées, de fils et/ou d'étoffes textiles.

19. Mélange réactionnel selon la revendication 18, **caractérisé en ce que** les étoffes textiles se présentent sous forme de tissus, d'articles tricotés, d'articles de bonneterie, d'articles tressés, de grilles, de nappes ou de non-tissés.

20. Mélange réactionnel selon au moins l'une des revendications précédentes, **caractérisé en ce qu'**il représente un système à 1 composant ou à 2 composants, avec un durcisseur stocké séparément.

21. Mélange réactionnel selon au moins l'une des revendications précédentes, **caractérisé en ce qu'**il contient au moins 10 % en moles, en particulier au moins 30 % en moles d'un composé époxyde polymérisable.

22. Mélange réactionnel selon la revendication 21, **caractérisé en ce qu'**il contient au moins 50 % en moles, en particulier 50 à 70 % en moles d'un composé époxyde polymérisable.

23. Mélange réactionnel selon au moins l'une des revendications précédentes, **caractérisé en ce qu'**il contient le précatalyseur en une quantité de 0,01 à 10 % en moles, en particulier de 0,1 à 1 % en moles, par rapport au composé époxyde polymérisable.

24. Mélange réactionnel selon au moins l'une des revendications 13 à 22, le mélange réactionnel polymérisable étant **caractérisé en ce qu'**il contient au moins 25 % en poids, en particulier au moins 50 % en poids d'un composé époxyde, par rapport à la quantité totale de l'époxyde et du durcisseur, indépendamment de la quantité introduite de précatalyseur et éventuellement d'autres constituants facultatifs, en particulier de solvants et d'autres additifs non réactifs.

25. Utilisation du mélange réactionnel selon au moins l'une des revendications précédentes, **caractérisée en ce qu'**elle sert à fabriquer des thermoplastiques ou des thermodurcissables de résines époxydes, en particulier à des températures de durcissement de 75°C à 145°C, en particulier de 100°C à 140°C.

26. Utilisation selon la revendication 25, **caractérisée en ce que** les températures de durcissement sont ajustées à 100°C à 140°C.

27. Utilisation selon la revendication 25 ou 26, ou utilisation du mélange réactionnel selon au moins l'une des revendications 1 à 24 pour la fabrication de résines époxydes dans le cadre d'un procédé de moulage par injection et réaction (RIM), d'un procédé de moulage par transfert de résine (RTM), d'un procédé d'infusion de résine ou d'une extrusion réactive, en particulier pour la fabrication de revêtements, d'adhésifs, d'agents d'étanchéité, de matériaux composites, à base de composés époxydes durcissables, en particulier y compris des structures textiles, des objets moulés, en particulier d'objets moulés poreux, et de mousses.
